# EUROPÄISCHE PATENTSCHRIFT

(11) **EP 2 470 592 B1**
(45) Veröffentlichungstag und Bekanntmachung des Hinweises auf die Patenterteilung: **12.10.2016**
(21) Anmeldenummer: 10751570.2
(22) Anmeldetag: 27.08.2010
(51) Int. Cl.: C08K 3/22, C08K 3/00

(54) **VERFAHREN ZUR KONFEKTIONIERUNG VON STABILISATOR-SCHMELZEN, DANACH HERGESTELLTE FORMKÖRPER UND DEREN VERWENDUNG**
PROCESS FOR FORMULATING STABILIZER MELTS, SHAPED BODIES PRODUCED THEREBY AND USE THEREOF
PROCÉDÉS POUR CONFECTIONNER DES MATIÈRES FONDUES SERVANT DE STABILISANTS, CORPS MOULÉS PRODUITS À PARTIR DE CES DERNIÈRES ET LEUR UTILISATION

(30) Priorität: 27.08.2009 DE 102009039125
(43) Veröffentlichungstag der Anmeldung: 04.07.2012
(73) Patentinhaber: Baerlocher GmbH, 85716 Unterschleissheim (DE)
(72) Erfinder: FRÖHLICH, Jörg, 80805 München (DE); REICHWALD, Frank, 80992 München (DE); FOKKEN, Stefan, 85244 Biberbach (DE)
(74) Vertreter: Herzog, Fiesser & Partner Patentanwälte PartG mbB
(86) Internationale Anmeldenummer: PCT/EP2010/005281
(87) Internationale Veröffentlichungsnummer: WO 2011/023402

(56) Entgegenhaltungen:
- EP-A1- 0 838 493
- EP-A1- 0 838 495

## Beschreibung

Die vorliegende Erfindung betrifft Verfahren zur Konfektionierung von Stabilisator-Schmelzen, danach hergestellte Formkörper und deren Verwendung.

Bekanntermaßen neigen halogenhaltige Kunststoffe bei thermischer Belastung während der Verarbeitung oder im Langzeitgebrauch zu unerwünschten Zersetzungs- und Abbaureaktionen. Bei dem Abbau halogenierter Polymerer, insbesondere bei PVC, entsteht Salzsäure, die aus dem Polymerstrang eliminiert wird, woraus ein verfärbter, ungesättigter Kunststoff mit farbgebenden Polyensequenzen resultiert.

Besonders problematisch wirkt sich dabei aus, dass halogenhaltige Polymere erst bei einer relativ hohen Verarbeitungstemperatur die zur Verarbeitung notwendigen rheologischen Rahmenbedingungen aufweisen. Bei derartigen Temperaturen setzt jedoch bei unstabilisierten Polymeren bereits eine merkliche Zersetzung des Polymeren ein, die sowohl zu der oben beschriebenen unerwünschten Farbänderung als auch zu einer Änderung der Materialeigenschaften führt. Darüber hinaus kann die aus nicht stabilisierten, halogenhaltigen Polymeren bei einer derartigen Verarbeitungstemperatur freigesetzte Salzsäure zu einer merklichen Korrosion der Verarbeitungsanlagen führen. Dieser Vorgang spielt insbesondere dann eine Rolle, wenn es bei der Verarbeitung derartiger halogenierter Polymere zu Formkörpern, beispielsweise durch Extrusion, zu Produktionsunterbrechungen kommt und die Polymermasse für eine längere Zeitdauer im Extruder verweilt. Während dieser Zeit kann es zu den obengenannten Zersetzungsreaktionen kommen, wodurch die im Extruder befindliche Charge unbrauchbar wird, und der Extruder gegebenenfalls geschädigt wird.

Weiterhin neigen Polymere, die einer derartigen Zersetzung unterworfen sind dazu, Anhaftungen an den Verarbeitungsanlagen zu bilden, die nur schwierig wieder zu entfernen sind.

Um die genannten Probleme zu lösen, werden halogenhaltigen Polymeren zur Verarbeitung üblicherweise als sogenannte Stabilisatoren Verbindungen zugesetzt, welche die obengenannten Zersetzungsreaktionen möglichst weitgehend verhindern sollen. In der Regel handelt es sich bei derartigen Stabilisatoren um Feststoffe, welche dem zu verarbeitenden Polymeren vor seiner Verarbeitung zugegeben werden.

Als Stabilisatoren werden oft basische Verbindungen eingesetzt, die in der Lage sind, die bei Verarbeitung und Alterung des halogenierten Polymeren freigesetzte Säure, insbesondere HCl im Falle von PVC, zu binden und so eine weitere Zerstörung des halogenhaltigen Polymeren und insbesondere eine Verfärbung desselben möglichst weitgehend zu verhindern.

Der Einsatz von Stabilisatorzusammensetzungen bei der Verarbeitung von halogenhaltigen Polymeren umfasst in der Regel das Vermischen von halogenhaltigen Polymeren und Stabilisatorzusammensetzungen dergestalt, dass eine möglichst innige Durchmischung von Stabilisatorzusammensetzungen und halogenhaltigen Polymeren erfolgt. Hierzu wurden in der Vergangenheit üblicherweise pulverförmige Stabilisatorzusammensetzungen eingesetzt. Darüber hinaus sind jedoch auch Stabilisatorzusammensetzungen bekannt, die beispielsweise in Form von Granulaten oder in Pastillenform vorliegen und trotzdem eine gute Verteilung im halogenhaltigen Polymeren im Rahmen des Verarbeitungsprozesses ermöglichen. Eine derartige Konfektionierung von Stabilisatorzusammensetzungen weist für den Anwender beispielsweise den Vorteil auf, dass solche Stabilisatorzusammensetzungen im Rahmen der Verarbeitung üblicherweise ein deutlich verbessertes Staubverhalten zeigen. Mit einem derart verbesserten Staubverhalten geht jedoch oft eine Reduzierung des Aufwands zur Reinhaltung der Arbeitsluft einher, die sich wiederum positiv auf der Kostenseite niederschlägt.

In der Vergangenheit wurden häufig Stabilisatorzusammensetzungen eingesetzt, die als Verbindung zum Abfangen von während der Verarbeitung oder im Rahmen des Alterungsprozesses entstehenden Säurebestandteilen Hydrotalcit enthielten. Derartige Stabilisatorzusammensetzungen waren beispielsweise aufgrund ihrer ausgezeichneten Eigenschaften hinsichtlich der Bewitterungsstabilität von mit derartigen Stabilisatoren stabilisierten Polymerzusammensetzungen beliebt. Problematisch wirkt sich jedoch bei derartigen, Hydrotalcite enthaltenden Stabilisatorzusammensetzungen aus, dass in vielen Fällen die Stabilisatorzusammensetzung als Pulver oder als Granulat konfektioniert werden muss. Eine Konfektionierung entsprechender Hydrotalcit haltiger Stabilisatoren als Pastillen oder als in sonstiger Weise vorgeformte Schmelzformkörper oder als Schuppen scheiterte bislang. Die bei einer entsprechenden Konfektionierung von Hydrotalcit enthaltenden Stabilisatorzusammensetzungen erhältlichen Materialien waren in der Regel derart gestaltet, dass eine staubfreie Lagerung, ein staubfreier Transport sowie ein staubfreies Umfüllen nicht möglich waren.

Die WO 2004/087801 betrifft die Verwendung von Zusammensetzungen, enthaltend basische Metalloxide und/oder Hydroxide, zur Stabilisierung von halogenhaltigen organischen Kunststoffen. Die basischen Metalloxide und/oder Hydroxide werden zum Schutz weiterer Inhaltsstoffe mit einer Matrix aus Kohlenwasserstoffen versehen. Diese Vorgehensweise zum Schutz der Inhaltsstoffe führt jedoch zu einem deutlich erhöhten Verfahrensaufwand, der ökonomische Nachteile mit sich bringt.

Die europäischen Anmeldungen EP 0838495 A1 betrifft Stabilisatorkombinationen für thermoplastische Harzzusammensetzungen, wobei die Stabilisatorzusammensetzungen Hydrotalcit, ein Salz der Formel CaₓAl₂(OH)_{2(x+3-y)}(HPO₃)_{y}*m H₂O, Polyol und/oder ein hydroxylgruppenhaltiges Isocyanurat enthalten. Die Anmeldung offenbart keine Schmelzen mit der beanspruchen Zusammensetzung und kein Verfahren zur Konfektionierung solcher Schmelzen.

Die europäischen Anmeldung EP 0838493 A1 offenbart eine Stabilisatorkombination für Kabelummantelungen, basierend auf halogenhaltigen Polymeren, insbesondere PVC, wobei die Kombination mindestens einen Hydrotalcit, mindestens ein basisches Calcium-Aluminium-Hydroxyphosphit und/oder mindestens ein basisches Calcium-Aluminium-Hydroxy-Carboxylat sowie gegebenenfalls ein organisches Zinksalz enthält. Die Anmeldung offenbart keine Schmelzen mit der beanspruchen Zusammensetzung oder nur das darin erhaltene Salz.

Der vorliegenden Erfindung lag daher die Aufgabe zu Grunde, ein Verfahren zur Konfektionierung von Stabilisatorzusammensetzungen zur Verfügung zu stellen, die eine ähnlich gute Bewitterungsstabilität aufweisen wie Stabilisatorzusammensetzungen, die Hydrotalcite enthalten, sich jedoch problemlos konfektionieren lassen. Insbesondere bestand eine Aufgabe der vorliegenden Erfindung darin, Stabilisatorzusammensetzungen zur Verfügung zu stellen, die hinsichtlich der Bewitterungsstabilität von mit solchen Stabilisatorzusammensetzungen stabilisierten Polymerzusammensetzungen ähnlich gute Ergebnisse aufweisen wie Stabilisatorzusammensetzungen, die Hydrotalcite enthalten, jedoch insbesondere in Pastillen- oder Schuppenform konfektioniert werden können, beispielsweise aus einer Schmelze der Stabilisatorzusammensetzung. Darüber hinaus lag der vorliegenden Erfindung die Aufgabe zugrunde, ein Verfahren zur Konfektionierung von Stabilisatorzusammensetzungen zur Verfügung zu stellen, das mit einer Vielzahl von Inhaltsstoffen und im Wesentlichen ohne Einschränkungen hinsichtlich der Stabilität der Inhaltsstoffe während der Durchführung des Verfahrens ausgeführt werden kann.

Die DE 41 06 411 A1 beschreibt basische Calcium-Aluminium-Hydroxy-Phosphite, Verfahren zu deren Herstellung und deren Verwendung. Die DE 41 06 404 C1 beschreibt Calcium-Aluminium-Hydroxy-Dicarboxylate, Verfahren zu deren Herstellung und deren Verwendung.

Die DE 196 27 258 A1 betrifft eine schmelzbare Stabilisatorkombination für thermoplastische Polymere, die durch Schmelzen mindestens eines Metallcarboxylats, Zugabe mindestens eines Antioxidationsmittels, Zugabe mindestens einer weiteren Metallverbindung, Abformen und Kühlen der Schmelze erhältlich ist.

Überraschenderweise wurde nun gefunden, dass es durch den Einsatz von Calcium-Aluminium-Hydroxyverbindungen, wie sie im Rahmen des nachfolgenden Textes beschrieben werden, möglich ist, den aus dem Stand der Technik bekannten Nachteilen abzuhelfen. Insbesondere ist es durch das erfindungsgemäße Verfahren und die erfindungsgemäßen Formkörper und Zusammensetzungen möglich, Stabilisatorzusammensetzungen zur Verfügung zu stellen, die ein ausgezeichnetes Stabilisierungsverhalten in nahezu allen für die Stabilisierung von Halogen haltigen Polymeren relevanten Bereichen zeigen, eine ausgezeichnete Verarbeitbarkeit des halogenhaltigen Polymeren unterstützen und darüber hinaus aufgrund ihrer Konfektionierung einerseits sehr gut handhabbar sind, eine vernachlässigbare Staubneigung zeigen, ausgezeichnet dosierbar sind und sich darüber hinaus homogen im zu stabilisierenden Polymeren verteilen.

Überraschenderweise wurde nun gefunden, dass diese Aufgaben durch ein Verfahren zur Konfektionierung, insbesondere zur Pastillierung von Schmelzen, gelöst werden, bei dem die Schmelze bis zu 40 Gew.-% Hydrocalumit, insbesondere Calcium-Aluminium Hydroxyphosphit oder Calcium-Aluminium-Hydroxycarbonat oder Calcium-Aluminium-Hydroxycitrat oder ein Gemisch aus zwei oder mehr davon, enthält.

Der Gegenstand der vorliegenden Erfindung wird durch die Ansprüche 1-13 definiert. Gegenstand der vorliegenden Erfindung ist daher ein Verfahren zur Konfektionierung von Schmelzen, die mindestens ein Salz der allgemeinen Formel CaₓAl₂(OH)₂(ₓ₊₃)_{-ny}A_{y}ⁿ⁻*m H₂O, worin x für eine Zahl von 2 bis 12, y für eine Zahl zwischen 0 und (2x+5)/2, m für eine Zahl von 0 bis 12 und n für eine Zahl von 1 bis 3 steht, bei dem eine mindestens ein Salz der allgemeinen Formel CaₓAl₂(OH)_{2(x+3)-ny}A_{y}ⁿ⁻*mH₂O, worin x für eine Zahl von 2 bis 12, y für eine Zahl zwischen 0 und (2x+5)/2, m für eine Zahl von 0 bis 12 und n für eine Zahl von 1 bis 3 steht, oder ein Gemisch aus zwei oder mehr solcher Salze und mindestens eine organische Verbindung oder ein Gemisch aus zwei oder mehr solcher Verbindungen mit einem Schmelzpunkt von weniger als 200°C enthaltende Schmelze zu Portionen portioniert wird und die Portionen anschließend unter Erhalt eines Schmelzformkörpers abgekühlt werden, wobei der Gehalt der Schmelze an organischer Verbindung mit einem Schmelzpunkt von weniger als 200°C und mindestens einem Salz der allgemeinen Formel CaₓAl₂(OH)_{2(x+3)-ny}A_{y}ⁿ⁻*m H₂O, worin x für eine Zahl von 2 bis 12, y für eine Zahl zwischen 0 und (2x+5)/2, m für eine Zahl von 0 bis 12 und n für eine Zahl von 1 bis 3 steht, 10 bis 100 Gew.-% beträgt.

Unter "Konfektionierung" wird im Rahmen der vorliegenden Erfindung jegliche Art der Formgebung verstanden, d.h. jeder Vorgang, welcher dazu geeignet ist, einen plastischen Gegenstand in eine bestimmte, im Wesentlichen dauerhafte Form zu bringen. Dies kann dadurch geschehen, dass eine thermoplastische Masse oder eine Schmelze in eine Form gegeben wird und dort unter Abkühlen oder Abkühlen lassen in der so gewonnenen Form fixiert wird, wie es z.B. beim Spritzgießen der Fall ist. Die Formgebung kann aber auch dadurch erfolgen, dass die thermoplastische Masse oder die Schmelze mehr oder weniger fein verteilt wird und sich beim Abkühlen in der so erlangten Form fixiert - dies ist z.B. durch pastillieren, schuppieren oder den Einsatz von Sprühtürmen möglich, bei dem im Wesentlichen kugelförmige Formen erhalten werden. Darüber hinaus ist es auch möglich, die thermoplastische Masse oder die Schmelze nach dem Erstarren weiter in ihrer Form zu verändern, wobei beispielsweise Zylinder, Quader, Würfel, Hexagone, Pastillen und andere Formen erhalten werden können. Darüber hinaus sind weitere Formgebungsverfahren denkbar und werden als Bestandteil der vorliegenden Erfindung angesehen.

Unter "Schmelzen die mindestens ein Salz der allgemeinen Formel CäₓAl₂(OH)_{2(x+3)-ny}A_{y}ⁿ⁻*m H₂O, worin x für eine Zahl von 2 bis 12, y für eine Zahl zwischen 0 und (2x+5)/2, m für eine Zahl von 0 bis 12 und n für eine Zahl von 1 bis 3 steht" werden im Rahmen der vorliegenden Erfindung jegliche Art von Schmelzen verstanden, die mindestens ein Salz der allgemeinen Formel CaₓAl₂(OH)_{2(x+3)-ny}A_{y}ⁿ⁻*m H₂O, worin x für eine Zahl von 2 bis 12, y für eine Zahl zwischen 0 und (2x+5)/2, m für eine Zahl von 0 bis 12 und n für eine Zahl von 1 bis 3 steht, oder ein Gemisch aus zwei oder mehr davon und mindestens eine organische Verbindung mit einem Schmelzpunkt von weniger als 200°C enthalten.

Erfindungsgemäß geeignet sind dabei beispielsweise Calcium-Aluminium-Hydroxy-Salze der allgemeinen Formel CaₓAl₂(OH)_{2(x+3)-ny}A_{y}ⁿ⁻*m H₂O, worin x = 2-12 und (2x +5) / 2 > y >0.

Aⁿ⁻ steht im Rahmen der vorliegenden Erfindung grundsätzlich für ein beliebiges Anion mit der Wertigkeit n, das bei der Durchführung des erfindungsgemäßen Verfahrens die Konfektionierung der Schmelze erleichtert. Beispielsweise sind die Anionen starker Säuern geeignet, insbesondere die Anionen halogenhaltiger Oxysäuren wie Perchlorsäure. Insbesondere handelt es sich bei geeigneten Anionen um Anionen schwacher Mineralsäuren, beispielsweise um Carbonate oder Phosphite oder um Anionen organischer, substituierter oder unsubstituierter Monocarbonsäuren, beispielsweise um Anionen linearer oder verzweigter, gesättigter oder ungesättigter Carbonsäuren mit 2 bis 18 C-Atomen wie Formiate oder Acetate oder um Anionen von gesättigten oder ungesättigten Polycarbonsäuren, beispielsweise um Citrate. Ebenfalls geeignet sind die Anionen organischer Sulfonsäuren wie Trifluormethylsulfonsäure. Das Carbonsäureanion Aⁿ⁻ kann beispielsweise ausgewählt werden aus Anionen der Malon-, Bernstein-, Adipin-, Fumar-, Malein-, Phthal-, Isophthal-, Terephthal-, Pyridin-, Benzoe-, Salicyl-, Tartron-, Äpfel-, Wein-, Acetondicarbon-, Oxalessig-, Aconit- und Zitronensäure. Bevorzugt sind die Anionen der Fumar-, Adipin- und Phthalsäure, insbesondere werden Fumarate eingesetzt.

In der obigen Formel bedeutet x vorzugsweise 2-8, insbesondere bevorzugt 3-6, und m bedeutet vorzugsweise 2-5.

Zur Herstellung der erfindungsgemäß geeigneten Calcium-Aluminium-Hydroxy-Salze werden beispielsweise Mischungen aus Calciumhydroxid und/oder Calciumoxid, Aluminiumhydroxid und Natriumhydroxid oder aus Calciumhydroxid und/oder Natriumaluminat mit der entsprechenden Säure, beispielsweise mit phosphoriger Säure oder Zitronensäure, in zur Herstellung der erwünschten Calcium-Aluminium-Hydroxy-Salze entsprechenden Mengenverhältnissen in wässrigem Medium umgesetzt und so das Umsetzungsprodukt gewonnen.

Das aus der oben beschriebenen Umsetzung direkt anfallende Umsetzungsprodukt kann dann nach bekannten Verfahren vom wässrigen Reaktionsmedium abgetrennt werden, vorzugsweise durch Filtration. Die Aufarbeitung des abgetrennten Umsetzungsprodukts erfolgt ebenfalls in an sich bekannter Weise, beispielsweise durch Waschen des Filterkuchens mit Wasser und Trocknen des gewaschenen Rückstands bei Temperaturen von beispielsweise 60-130°C, vorzugsweise bei 90-120°C.

Für die Umsetzung kann sowohl ein feinteiliges, aktives Aluminiumhydroxid in Kombination mit Natriumhydroxid, als auch ein Natriumaluminat eingesetzt werden. Calcium kann in Form von feinteiligem Calciumoxid oder -hydroxid oder Mischungen daraus verwendet werden. Die erforderliche Säure kann in unterschiedlicher konzentrierter Form eingesetzt werden.

Die Umsetzungstemperaturen liegen vorzugsweise zwischen etwa 50 und 100°C, weiter vorzugsweise zwischen etwa 60 und 85°C. Katalysatoren oder Beschleuniger sind nicht erforderlich. Bei den erfindungsgemäßen Verbindungen kann das Kristallwasser ganz oder teilweise durch thermische Behandlung entfernt werden.

Bei ihrer Anwendung als Stabilisatoren spalten die erfindungsgemäßen, getrockneten Calcium-Aluminium-Hydroxy-Salze bei den bspw. für Hart-PVC üblichen Verarbeitungstemperaturen von 160-200°C kein Wasser ab, so dass in den Formteilen aus diesem Grund keine störende Blasenbildung auftritt.

Zur Verbesserung ihrer Dispergierbarkeit in halogenhaltigen thermoplastischen Harzen können die erfindungsgemäßen Verbindungen in bekannter Weise mit oberflächenaktiven Mitteln gecoatet werden.

Entsprechende Verbindungen und Verfahren zu deren Herstellung sind beispielsweise in den Druckschriften DE 10 29006 055 214 A1, DE 41 06 411 A1 und DE 41 06 404 C1 beschrieben.

Im Rahmen des erfindungsgemäßen Verfahrens zur Konfektionierung von Stabilisatorzusammensetzungen wird eine Schmelze hergestellt, die mindestens ein Salz der allgemeinen Formel CaₓAl₂(OH)_{2(x+3)-ny}A_{y}ⁿ⁻*m H₂O, worin x für eine Zahl von 2 bis 12, y für eine Zahl zwischen 0 und (2x+5)/2, m für eine Zahl von 0 bis 12 und n für eine Zahl von 1 bis 3 steht, und mindestens eine organische Verbindung mit einem Schmelzpunkt von weniger als 200°C enthält.

Als organische Verbindung mit einem Schmelzpunkt von weniger als 200°C eignet sich grundsätzlich jede beliebige organische Verbindung, die einerseits dazu geeignet ist, eine konfektionierbare Schmelze zu erzeugen und andererseits als Bestandteil einer Stabilisatorzusammensetzung zur Stabilisierung halogenhaltiger Polymere zumindest keine nachteiligen oder keine mehr als vermeidbar nachteiligen Eigenschaften aufweist. Vorzugsweise ist eine derartige organische Verbindung mit einem Schmelzpunkt von weniger als 200°C gegenüber weiteren in einer solchen Schmelze vorliegenden Verbindungen, insbesondere gegenüber Salzen der allgemeinen Formel CaₓAl₂(OH)_{2(x+3)-ny}A_{y}ⁿ⁻*m H₂O, worin x für eine Zahl von 2 bis 12, y für eine Zahl zwischen 0 und (2x+5)/2, m für eine Zahl von 0 bis 12 und n für eine Zahl von 1 bis 3 steht, inert oder zumindest im Wesentlichen inert.

Als organische Verbindungen mit einem Schmelzpunkt von weniger als 200°C eignen sich insbesondere Metallseifen von gesättigten, ungesättigten, geradkettigen oder verzweigten, aromatischen, cycloaliphatischen oder aliphatischen Carbonsäuren mit vorzugsweise etwa 2 bis etwa 44 C-Atomen. Hinsichtlich geeigneter Carbonsäuren wird auf die in diesem Text bei der Definition der "langkettigen Ester" angegebene nicht abschließende Liste von Carbonsäuren verwiesen.

Unter den gesättigten, ungesättigten, geradkettigen oder verzweigten, aromatischen, cycloaliphatischen oder aliphatischen Carbonsäuren mit vorzugsweise etwa 2 bis etwa 44 C-Atomen haben sich die gesättigten Carbonsäuren als gut geeignet herausgestellt. Beispielsweise eignen sich gesättigte lineare Carbonsäuren mit etwa 6 bis etwa 28, beispielsweise etwa 12 bis etwa 24 oder etwa 14 bis etwa 20 Kohlenstoffatomen, beispielsweise mit etwa 14, 16 oder 18 Kohlenstoffatomen.

Im Rahmen einer weiteren Ausführungsform der vorliegenden Erfindung werden als organische Verbindungen mit einem Schmelzpunkt von weniger als 200°C vorzugsweise Metallseifen eingesetzt, deren Anionen sich von gesättigten oder ungesättigten Carbonsäuren oder Hydroxycarbonsäuren mit etwa 8 bis etwa 20 C-Atomen ableiten. Besonders bevorzugt sind hierbei Stearate, Oleate, Laurate, Palmitate, Behenate, Versatate, p-tert-Butylbenzoate oder (Iso)Octanoate oder Gemische aus zwei oder mehr davon.

Als Metallkationen weisen die als Zusatzstoffe geeigneten Metalloxide, Metallhydroxide oder Metallseifen vorzugsweise ein zweiwertiges Kation auf, besonders geeignet sind die Kationen von Magnesium, Barium, Aluminium, Calcium oder Zink oder deren Gemische, insbesondere die Kationen von Calcium oder Zink sowie deren Gemische.

Ebenfalls als organische Verbindungen mit einem Schmelzpunkt von weniger als 200°C geeignet sind beispielsweise Paraffinwachse, Polyethylenwachse, Amidwachse, Chlorparaffine oder als Gleitmittel bezeichnete Verbindungen, wie sie beispielsweise in "Kunststoffadditive", R. Gächter/H. Müller, Carl Hanser Verlag, 3. Auflage, 1989, S. 478 - 488 beschrieben werden. Weiterhin als organische Verbindungen mit einem Schmelzpunkt von weniger als 200°C geeignet sind beispielsweise Fettketone wie sie in der DE 4,204,887 beschrieben werden. Auf die genannten Dokumente wird hiermit ausdrücklich Bezug genommen, deren Gleitmittel betreffende Offenbarung wird als Bestandteil der Offenbarung des vorliegenden Textes betrachtet. Weiterhin als organische Verbindungen geeignet sind chlorierte Kohlenwasserstoffe (Paraffine) oder Kohlenwasserstoffe wie sie in "Kunststoffadditive", R. Gächter/H. Müller, Carl Hanser Verlag, 3. Auflage, 1989, Kapitel 5.9.14.2, S. 422-425 und Kapitel 5.9.14.1, S. 422, beschrieben sind. Ebenfalls als organische Verbindungen mit einem Schmelzpunkt von weniger als 200°C geeignet sind darüber hinaus Gleitmittel auf Esterbasis wie Stearylstearat, Distearylphthalat und dergleichen, wie sie in "Kunststoffadditive", R. Gächter/H. Müller, Carl Hanser Verlag, 3. Auflage, 1989 beschrieben werden, sofern diese Gleitmittel keine negative Auswirkung auf das Ziel der Erfindung aufweisen.

Im Rahmen einer weiteren Ausführungsform der vorliegenden Erfindung enthält die erfindungsgemäß zu konfektionierende Stabilisator-Schmelze Calciumstearat oder Zinkstearat oder deren Gemisch als Gemisch aus zwei oder mehr organischen Verbindungen mit einem Schmelzpunkt von weniger als 200°C.

Der Gehalt einer im Rahmen der vorliegenden Erfindung einsetzbaren Schmelze an organischer Verbindung mit einem Schmelzpunkt von weniger als 200°C und mindestens einem Salz der allgemeinen Formel CaₓAl₂(OH)_{2(x+3)-ny}A_{y}ⁿ⁻*m H₂O, worin x für eine Zahl von 2 bis 12, y für eine Zahl zwischen 0 und (2x+5)/2, m für eine Zahl von 0 bis 12 und n für eine Zahl von 1 bis 3 steht, beträgt insgesamt 10 bis 100 Gew.-%, bezogen auf die gesamte Schmelze. Beispielsweise beträgt der Gehalt einer im Rahmen der vorliegenden Erfindung einsetzbaren Schmelze an organischer Verbindung mit einem Schmelzpunkt von weniger als 200°C und mindestens einem Salz der allgemeinen Formel CaₓAl₂(OH)_{2(x+3)-ny}A_{y}ⁿ⁻ *m H₂O, worin x für eine Zahl von 2 bis 12, y für eine Zahl zwischen 0 und (2x+5)/2, m für eine Zahl von 0 bis 12 und n für eine Zahl von 1 bis 3 steht, etwa 10 bis etwa 98 oder 20 bis etwa 97 oder etwa 40 bis etwa 96 oder etwa 50 bis etwa 95 Gew.-%.

Bezogen auf den Anteil an organischer Verbindung mit einem Schmelzpunkt von weniger als 200°C und mindestens einem Salz der allgemeinen Formel CaₓAl₂(OH)_{2(x+3)-ny}A_{y}ⁿ⁻*mH₂O in der Schmelze wird der Anteil an mindestens einem Salz der allgemeinen Formel CaₓAl₂(OH)_{2(x+3)-ny}A_{y}ⁿ⁻*m H₂O so gewählt, dass eine Konfektionierung der Schmelze im Rahmen des erfindungsgemäßen Verfahrens möglich ist. Beispielsweise beträgt der Anteil an mindestens einem Salz der allgemeinen Formel CaₓAl₂(OH)_{2(x+3)-ny}A_{y}ⁿ⁻*mH₂O etwa 0,1 bis etwa 80 Gew.-% oder etwa 1 bis etwa 60 Gew.-% oder etwa 2 bis etwa 40 Gew.-%.

Im Rahmen eines erfindungsgemäßen Verfahrens zur Herstellung von konfektionierbaren Stabilisator-Schmelzen kann die Herstellung der Schmelze prinzipiellen auf beliebige Weise erfolgen. So können beispielsweise alle Bestandteile der Schmelze in einer entsprechenden Apparatur vorgelegt werden, wobei anschließend auf geeignete Weise Wärme eingetragen und die Vorlage damit zur Schmelze gebracht wird. Es ist jedoch im Rahmen der vorliegenden Erfindung ebenso möglich, zunächst beispielsweise die schmelzbaren Bestandteile der Schmelze vorzulegen, diese aufzuschmelzen und anschließend die bei der Schmelzetemperatur nicht schmelzenden Bestandteile hinzuzufügen.

Das erfindungsgemäße Verfahren kann als Batch-Verfahren oder als kontinuierliches Verfahren durchgeführt werden. Wenn das Verfahren in Batch-Verfahren durchgeführt wird, so kann es grundsätzlich in beliebigen, vorzugsweise mit einer Rührapparatur ausgestatteten, beispielsweise beheizbaren Kesseln durchgeführt werden. Als Heizmittel kommen grundsätzlich alle Möglichkeiten in Betracht, mit denen sich der Inhalt eines entsprechenden Kessels derart Erwärmen lässt, dass der Inhalt eine entsprechende Schmelze bildet.

Wenn das erfindungsgemäße Verfahren kontinuierlich durchgeführt werden soll, so sind hierzu grundsätzlich alle Apparaturen geeignet, welche eine kontinuierliche Durchführung des erfindungsgemäßen Verfahrens ermöglichen. Beispielsweise sind dies Schleifenreaktoren und dergleichen.

Die Stabilisator-Schmelze kann darüber hinaus noch eine Vielzahl weiterer Verbindungen als Zusatzstoffe umfassen, die verschiedenen Aufgaben in der Schmelze oder im Produkt dienen. Die nachfolgend genannten Zusatzstoffe können grundsätzlich im Rahmen einer erfindungsgemäßen Schmelze eingesetzt werden. Es ist jedoch, beispielsweise in Abhängigkeit vom Gehalt der Schmelze mindestens einem Salz der allgemeinen Formel CaₓAl₂(OH)_{2(x+3)-ny}A_{y}ⁿ⁻*mH₂O möglich, dass bestimmte nachfolgend genannte Zusatzstoffe nur bis zu einem bestimmten Gehalt der Schmelze an mindestens einem Salz der allgemeinen Formel CaₓAl₂(OH)_{2(x+3)-ny}A_{y}ⁿ⁻*mH₂O eingesetzt werden können. Eine Überprüfung dieses Sachverhaltes ist jedoch für den Fachmann ohne unzumutbaren Aufwand einfach möglich, indem ein bestimmter Zusatzstoff in Schmelzen mit verschiedenen Gehalten an mindestens einem Salz der allgemeinen Formel CaₓAl₂(OH)_{2(x+3)-ny}A_{y}ⁿ⁻*mH₂O eingebracht wird und sein Verhalten hinsichtlich einer gegebenenfalls auftretenden Zersetzung in der Schmelze überprüft wird.

Eine Stabilisatorzusammensetzung, wie sie nach einem erfindungsgemäßen Verfahren erhältlich ist, kann grundsätzlich noch Zusatzstoffe enthalten, die beispielsweise einer Verbesserung der Stabilisierungswirkung oder einer Verbesserung der Verarbeitbarkeit einer mit einer solchen Stabilisierungszusammensetzung stabilisierten Polymerzusammensetzung dienen.

Als Zusatzstoffe geeignet sind beispielsweise Polyole und langkettige Ester. Unter einem "Polyol" wird im Rahmen der vorliegenden Erfindung eine Verbindung verstanden, die mindestens zwei alkoholische Gruppen trägt. Die einfachsten derartigen Verbindungen sind demnach Ethan-1,2-diol, Propan-1,2-diol und Propan-1,3-diol, Butan-1,2-diol, Butan-1,3-diol und Butan-1,4-diol usw. Selbstverständlich können die Verbindungen auch mehr als zwei alkoholische Gruppen ragen, wie Propan-1,2,3-triol, Butan-1,2,3-triol und Butan-1,2,4-triol, wobei auch hier wieder nur die einfachsten Vertreter genannt sind, was aber nicht dahingehend zu interpretieren ist, dass die Aufzählung abschließend ist - vielmehr sind alle weiteren Vertreter dieser Gruppen eingeschlossen. Es ist auch unerheblich, ob es sich um primäre, sekundäre oder tertiäre alkoholische Gruppen handelt. Die Kohlenstoffgrundkörper (in den aufgezählten Beispielen also Ethan, Propan und Butan) können außerdem auch verzweigt sein, wobei auch die Verzweigungen alkoholische Gruppen tragen können oder die Kohlenstoffgrundkörper können über Sauerstoffatome miteinander verknüpft sein. Nichtlimitierende Beispiele für die erste Gruppe sind 2-Methylbutan-1-ol, 2-Methylbutan-1,2-diol und 2-Hydroxymethylbutan-1,4-ol, sowie für die zweite Gruppe Ethylenglycol und Propylenglycol.

Zur besseren Veranschaulichung seien nun noch einige weitere Polyole genannt, die unter die oben angegebene Definition fallen und üblicherweise in derartigen Schmelzen Verwendung finden können: Pentaerythrit, Dipentaerythrit, Tripentaerythrit, Bistrimethylolpropan, Inosit, Polyvinylalkohol, Bistrimetylolethan, Trimethylolpropan, Sorbit, Maltit, Isomaltit, Lactit, Lycasin, Mannit, Lactose, Leucrose, Tris-(hydroxymethyl)isocyanurat, Palatinit, Tetramethylolcyclohexanol, Tetramethylolcyclopentanol, Tetramethylolcycloheptanol, Glyzerin, Diglyzerin, Polyglyzerin, Thiodiglyzerin oder 1-0-α-D-Glycopyranosyl-D-mannit-dihydrat.

Unter einem "langkettigen Ester" wird im Rahmen der vorliegenden Erfindung ein Ester verstanden, wie er durch Reaktion einer geeigneten organischen Säure mit einem geeigneten Alkohol in dem Fachmann bekannter Weise erhalten werden kann, wobei mindestens eine der mindestens zwei Kohlenstoffgruppen in Säure bzw. Alkohol mindestens vier Kohlenstoffatome umfasst. Die mindestens zwei Kohlenstoffgruppen in Säure bzw. Alkohol werden dabei zum Einen durch den Grundkörper der korrespondierenden Säure und zum Anderen durch den Grundkörper des korrespondierenden Alkohols gebildet. Beispielsweise umfasst mindestens eine dieser beiden Grundkörper mindestens 6 Kohlenstoffatome oder mindestens 12 Kohlenstoffatome oder mindestens 18 Kohlenstoffatome.

Im Rahmen einer weiteren Ausführungsform der vorliegenden Erfindung umfassen beide Kohlenstoffgruppen beispielsweise jeweils mindestens 4, beispielsweise mindestens 6 oder mindestens 12 oder mindestens 18 Kohlenstoffatome. Nichtabschließende Beispiele für derartige Ester sind demnach solche, die z.B. aus der Reaktion von gesättigten Alkoholen, wie Ethyl-, Propyl-, Butyl-, Pentyl-, Hexyl-, Heptyl-, Octyl-, Nonyl-, Decyl, Cetyl-, Ceryl- und Myricylalkohol oder von ungesättigten Alkoholen, wie Vinyl-, Allyl- und Propargylalkohol mit gesättigten Säuren, wie Ameisen-, Essig-, Propion-, Butter-, Valerian-, Capron-, Capryl-, Caprin-, Laurin-, Önanth-, Octan-, Neodecan-, 2-Ethylhexan-, Pelargon-, Decan-, Undecan-, Dodecan-, Tridecan-, Myristyl-, Palmitin-, Staerin-, Behen-, 3,6-Dioxaheptan- und 3,6,9-Trioxadecansäure, oder mit ungesättigten Säuren, wie Acryl-, Methacryl-, Croton-, Isocroton-, Vinylessig-, Öl-, Elaidin- und Propinsäure, oder mit aromatischen Säuren, wie Benzoe-, p-tert-Butylbenzoe-, Tolyl-, Dimethylbenzoe-, Ethylbenzoe-, n-Propylbenzoe-, Salicyl-, p-tert-Octylsalicyl-, Sorbinsäure, oder mit divalenten Carbonsäuren, wie Oxal-, Malon-, Malein-, Wein-, Zimt-, Mandel-, Äpfel-, Glykol- und Polyglykoldicarbonsäuren mit einem Polymerisationsgrad von etwa 10 bis etwa 12, Phthal-, Isophthal-, Terephthal- oder Hydroxyphthalsäure, oder mit tri- oder tetravalenten Carbonsäuren, wie Hemimellith-, Trimellith- und Pyromellithsäure unter der Voraussetzung erhalten werden können, dass nicht eine Säure und ein Alkohol miteinander kombiniert werden, die beide jeweils weniger als vier Kohlenstoffatome umfassen. Auch wenn es sich hierbei nur um eine der Veranschaulichung dienende nicht abschließende Aufzählung handelt, sei doch darauf hingewiesen, dass jeweils alle denkbaren Formen der Säuren bzw. Alkohole allein oder als Mischung vorliegen können, z.B. steht "Valeriansäure" nicht nur für n-Valeriansäure, sondern auch für Isovaleriansäure, Ethyl-methyl-essigsäure und Trimethylessigsäure.

Ebenfalls als Zusatzstoffe geeignet sind beispielsweise Aminouracilverbindungen der allgemeinen Formel I 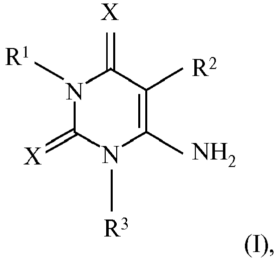 worin die Reste R¹ bis R³ jeweils unabhängig voneinander für Wasserstoff, einen gegebenenfalls substituierten linearen oder verzweigten, gesättigten oder ungesättigten aliphatischen Alkylrest mit 1 bis 44 C-Atomen, einen gegebenenfalls substituierten gesättigten oder ungesättigten Cycloalkylrest mit 6 bis 44 C-Atomen oder einen gegebenenfalls substituierten Arylrest mit 6 bis 44 C-Atomen oder einen gegebenenfalls substituierten Aralkylrest mit 7 bis 44 C-Atomen stehen oder der Rest R¹ für einen gegebenenfalls substituierten Acylrest mit 2 bis 44 C-Atomen steht, und der Rest R³ für Wasserstoff, einen gegebenenfalls substituierten linearen oder verzweigten, gesättigten oder ungesättigten aliphatischen Kohlenwasserstoffrest mit 1 bis 44 C-Atomen, einen gegebenenfalls substituierten gesättigten oder ungesättigten cycloaliphatischen Kohlenwasserstoffrest mit 6 bis 44 C-Atomen oder einen gegebenenfalls substituierten aromatischen Kohlenwasserstoffrest mit 6 bis 44 C-Atomen steht.

Als Zusatzstoffe eignen sich darüber hinaus generell Verbindungen mit einem Strukturelement der allgemeinen Formel II 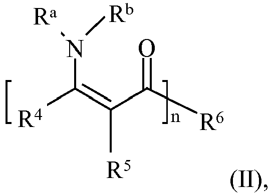 worin n für eine Zahl von 1 bis 100.000, die Reste R^{a}, R^{b}, R⁴ und R⁵ jeweils unabhängig voneinander für Wasserstoff, einen gegebenenfalls substituierten linearen oder verzweigten, gesättigten oder ungesättigten aliphatischen Alkylrest mit 1 bis 44 C-Atomen, einen gegebenenfalls substituierten gesättigten oder ungesättigten Cycloalkylrest mit 6 bis 44 C-Atomen oder einen gegebenenfalls substituierten Arylrest mit 6 bis 44 C-Atomen oder einen gegebenenfalls substituierten Aralkylrest mit 7 bis 44 C-Atomen stehen oder der Rest R⁴ für einen gegebenenfalls substituierten Acylrest mit 2 bis 44 C-Atomen steht oder die Reste R⁴ und R⁵ zu einem aromatischen oder heterocyclischen System verbunden sind und worin der Rest R⁶ für Wasserstoff, einen gegebenenfalls substituierten, linearen oder verzweigten, gesättigten oder ungesättigten aliphatischen Alkyl- oder Alkylenrest oder Oxyalkyl- oder Oxyalkylenrest oder Mercaptoalkyl- oder Mercaptoalkylenrest oder Aminoalkyl- oder Aminoalkylenrest mit 4 oder 5 oder 6 bis 44 C-Atomen, einen gegebenenfalls substituierten gesättigten oder ungesättigten Cycloalkyl- oder Cycloalkylenrest oder Oxycycloalkyl- oder Oxycycloalkylenrest oder Mercaptocycloalkyl- oder Mercaptocycloalkylenrest oder Aminocycloalkyl- oder Aminocycloalkylenrest mit 6 bis 44 C-Atomen oder einen gegebenenfalls substituierten Aryl- oder Arylenrest mit 6 bis 44 C-Atomen oder einen Ether- oder Thioetherrest mit 1 bis 20 O- oder S-Atomen oder O- und S-Atomen oder für ein Polymeres, das über O, S, NH, NR^{a} oder CH₂C(O) an n Stellen mit dem in Klammern stehenden Strukturelement verbunden ist, steht oder der Rest R⁶ mit dem Rest R⁴ so verbunden ist, dass insgesamt ein gegebenenfalls substituiertes, gesättigtes oder ungesättigtes heterocyclisches Ringsystem mit 4 bis 24 C-Atomen gebildet wird.

Die genannten Verbindungen können in einer erfindungsgemäßen Stabilisator-Schmelze jeweils alleine oder als Gemisch aus zwei oder mehr davon enthalten sein.

Weiterhin als Zusatzstoffe geeignet sind alle Isocyanurate, die mindestens eine OH-Gruppe aufweisen. Im Rahmen einer bevorzugten Ausführungsform der vorliegenden Erfindung werden jedoch Isocyanurate eingesetzt, die mindestens zwei OH-Gruppen enthalten. Besonders bevorzugt ist im Rahmen der vorliegenden Erfindung jedoch der Einsatz von Isocyanuraten, die drei OH-Gruppen aufweisen.

Im Rahmen einer besonders bevorzugten Ausführungsform der vorliegenden Erfindung wird das hydroxylgruppenhaltige Isocyanurat aus Verbindungen der allgemeinen Formel (III) 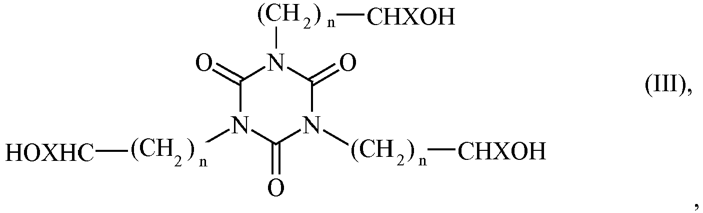 worin die Gruppen X und die Indices n gleich oder verschieden sind und n für eine ganze Zahl von 0 bis 5 und X für ein Wasserstoffatom oder für eine lineare oder verzweigte Alkylgruppe mit 1 bis 6 Kohlenstoffatomen steht, ausgewählt.

Besonders bevorzugt sind dabei Tris(hydroxyethyl)isocyanurat (im Folgenden als THEIC bezeichnet) sowie gehinderte phenolische Isocyanurate gemäß der EP 0 685 516 B1, auf deren Offenbarung hinsichtlich entsprechender gehinderter phenolischer Isocyanurate ausdrücklich Bezug genommen wird.

Es ist erfindungsgemäß beispielsweise möglich, dass die im Rahmen des erfindungsgemäßen Verfahrens ein oder mehrere der genannten Isocyanurate in einer Menge von 0 bis 10 phr, beispielsweise etwa 0,001 bis etwa 8 oder etwa 0,005 bis etwa 5 phr, bezogen auf das zu stabilisierende thermoplastische Harz oder die zu stabilisierenden thermoplastischen Harze, eingesetzt werden.

Als weitere Zusatzstoffe sind beispielsweise Verbindungen geeignet, die ein mercaptofunktionelles sp²-hybridisiertes C-Atom aufweisen, Carbazole, Carbazolderivate oder 2,4-Pyrrolidindion oder 2,4-Pyrrolidindion-Derivate.

Als Verbindungen, die mindestens ein mercaptofunktionelles sp²-hybridisiertes C-Atom aufweisen eignen sich im Rahmen der vorliegenden Erfindung grundsätzlich alle Verbindungen, die ein Strukturelement Z=CZ-SH oder ein Strukturelement Z₂C=S aufweisen, wobei beide Strukturelemente tautomere Formen einer einzigen Verbindung sein können. Z steht dabei für beliebige Reste, die zusammen mit der Struktur C=S eine Verbindung mit mindestens einem sp²-hybridisierten C-Atom bilden. Z kann beispielsweise für lineare, verzweigte, gesättigte oder ungesättigte, aliphatische oder aromatische oder cyclische Strukturen stehen. Das sp²-hybridisierte C-Atom kann dabei Bestandteil einer gegebenenfalls substituierten aliphatischen Verbindung oder Bestandteil eines aromatischen Systems sein. Geeignete Verbindungstypen sind beispielsweise Thiocarbamidsäurederivate, Thiocarbamate, Thiocarbonsäuren, Thiobenzoesäurederivate, Thioacetonderivate oder Thioharnstoff oder Thioharnstoffderivate.

Ebenfalls als Zusatzstoffe eignen sich beispielsweise Epoxyverbindungen. Beispiele für derartige Epoxyverbindungen sind epoxidiertes Sojaöl, epoxidiertes Olivenöl, epoxidiertes Leinöl, epoxidiertes Rizinusöl, epoxidiertes Erdnussöl, epoxidiertes Maisöl, epoxidiertes Baumwollsamenöl sowie Glycidylverbindungen.

Besonders geeignete Epoxyverbindungen sind beispielsweise in der EP-A 1 046 668 auf den Seiten 3 bis 5 beschrieben, wobei auf die dort enthaltene Offenbarung ausdrücklich Bezug genommen wird.

Weiterhin als Zusatzstoffe im Rahmen der vorliegenden Erfindung geeignet sind 1,3-Dicarbonylverbindungen, insbesondere die β-Diketone und β-Ketoester. Im Rahmen der vorliegenden Erfindung geeignet sind Dicarbonylverbindungen der allgemeinen Formel R'C(O)CHR" -C(O)R"', wie sie beispielsweise auf S. 5 der EP 1 046 668 beschrieben sind, auf die insbesondere im Hinblick auf die Reste R', R" und R"' ausdrücklich Bezug genommen wird und deren Offenbarung als Bestandteil der Offenbarung des vorliegenden Textes betrachtet wird. Besonders geeignet sind hierbei beispielsweise Acetylaceton, Butanoylaceton, Heptanoylaceton, Stearoylaceton, Palmitoylaceton, Lauroylaceton, 7-tert-Nonylthioheptandion-2,4, Benzoylaceton, Dibenzoylmethan, Lauroylbenzoylmethan, Palmitoylbenzoylmethan, Stearoylbenzoylmethan, Isooctylbenzoylmethan, Tribenzoylmethan, Bis(4-methylbenzoyl)methan, Benzoyl-p-chlorbenzoylmethan, Benzoylformylmethan, Benzoylacetylphenylmethan, 1-Benzoyl-1-acetylnonan, Stearoyl-4-methoxybenzoylmethan, Bis(4-tert-butylbenzoyl)methan, Benzoylphenylacetylmethan, Bis(cyclohexanoyl)methan, Dipivaloylmethan, 2-Acetylcyclopentanon oder 2-Benzoylcyclopentanon.

1,3-Diketoverbindungen können in einer erfindungsgemäßen Stabilisator-Schmelze in einer Menge von 0 bis zu etwa 20 Gew.-%, beispielsweise etwa 0,1 bis zu etwa 10 Gew.-%, enthalten sein.

Ebenfalls als Zusatzstoffe geeignet sind beispielsweise sterisch gehinderte Amine, wie sie in der EP-A 1 046 668 auf den Seiten 7 bis 27 genannt werden. Auf die dort offenbarten sterisch gehinderten Amine wird ausdrücklich Bezug genommen.

Die als Zusatzstoffe geeigneten sterisch gehinderten Amine können in einer erfindungsgemäßen Stabilisator-Schmelze in einer Menge von bis zu etwa 30 Gew.-%, beispielsweise bis zu etwa 10 Gew.-% enthalten sein.

Eine erfindungsgemäße Stabilisator-Schmelze kann darüber hinaus weiterhin als Zusatzstoff eine Organozinnverbindung oder ein Gemisch aus zwei oder mehr Organozinnverbindungen enthalten. Geeignete Organozinnverbindungen sind beispielsweise Methylzinn-tris-(isooctyl-thioglycolat), Methylzinn-tris-(isooctyl-3-mercaptopropionat), Methylzinn-tris-(isodecyl-thioglycolat), Dimethylzinn-bis-(isooctyl-thioglycolat), Dibutylzinn-bis-(isooctyl-thioglycolat), Monobutylzinn-tris-(isooctyl-thioglycolat), Dioctylzinn-bis-(isooctyl-thioglycolat), Monooctylzinn-tris-(isooctyl-thioglycolat) oder Dimethylzinn-bis-(2-ethylhexyl-β-mercaptopropionat).

Darüber hinaus sind im Rahmen der erfindungsgemäßen Stabilisator-Schmelze die in der EP-A 0 742 259 auf den Seiten bis 18 bis 29 genannten und in ihrer Herstellung beschriebenen Organozinnverbindungen einsetzbar. Auf die oben genannte Offenbarung wird ausdrücklich Bezug genommen.

Eine erfindungsgemäß zu konfektionierende Stabilisator-Schmelze kann die beschriebenen Organozinnverbindungen in einer Menge von 0 bis zu etwa 40 Gew.-%, insbesondere etwa 0,1 bis etwa 20 Gew.-%, enthalten.

Ebenfalls als Zusatzstoffe im Rahmen des erfindungsgemäßen Verfahrens geeignet sind beispielsweise Salze halogenhaltiger Oxysäuren, insbesondere Perchlorate der allgemeinen Formel M(ClO₄)ₖ, wobei M für ein geeignetes anorganisches oder organisches Kation steht. Der Index k steht entsprechend der Wertigkeit von M für die Zahl 1, 2 oder 3. Erfindungsgemäß geeignete anorganische Kationen M sind beispielsweise Li, Na, K, Mg, Ca, Sr, Zn, Al, La, Ce oder NH₄.

Als erfindungsgemäß geeignete organische Kationen M sind beispielsweise organische Onium-Ionen zu nennen, wobei unter dem Begriff "organisches Onium-Ion" im Rahmen des vorliegenden Textes Ammonium-, Sulfonium- oder Phosphonium-Ionen verstanden werden, die jeweils mindestens einen organischen Rest tragen. Ein entsprechendes Oniumsalz gemäß der vorliegenden Erfindung kann dabei, je nach Art der Oniumgruppe, 1, 2, 3 oder 4 organische Reste tragen. Die organischen Reste können dabei beispielsweise über eine C-X-Verknüpfung, wobei X für N, S oder P steht, mit einem positiv geladenen N-, S- oder P-Atom eines erfindungsgemäßen Onium-Ions verbunden sein. Es ist jedoch ebenso möglich, dass die organischen Reste über ein weiteres Heteroatom, beispielsweise ein O-Atom, mit einem positiv geladenen N-, S- oder P-Atom eines erfindungsgemäßen Onium-Ions verbunden sind.

Als Phosphoniumperchlorate sind im Rahmen der vorliegenden Erfindung grundsätzlich alle Verbindungen einsetzbar, die durch entsprechende Umsetzung geeigneter Reaktanden zu einem Phosphoniumperchlorat führen. Dabei können erfindungsgemäß einsetzbare Phosphoniumperchlorate beispielsweise durch entsprechende Umsetzung von Tetraalkyl-, Tetracycloalkyl- oder Tetraarylphosphorhalogeniden erhalten werden. Geeignete Phosphoniumperchlorate leiten sich daher beispielsweise von Tetraalkylphosphorsalzen wie Tetra-n-ethylphosphoniumbromid, Tetra-n-propylphosphoniumbromid, Tetra-n-butylphos-phoniumbromid, Tetra-n-isobutylphosphoniumbromid, Tetra-n-pentylphosphonium-bromid, Tetra-n-hexylphosphoniumbromid und dergleichen Tetraalkylphosphorsalzen ab.

Als Sulfoniumperchlorate sind im Rahmen der vorliegenden Erfindung grundsätzlich alle Verbindungen einsetzbar, die durch entsprechende Umsetzung geeigneter Reaktanden zu einem Sulfoniumperchlorat führen. Dabei können erfindungsgemäß einsetzbare Sulfoniumperchlorate beispielsweise durch entsprechende Umsetzung von Sulfiden wie Alkylmonosulfiden, Alkyldisulfiden, Dialkylsulfiden oder Polyalkylsulfiden erhalten werden. Geeignete Sulfoniumperchlorate leiten sich daher beispielsweise von Dialkylsulfiden wie Ethylbenzylsulfid, Allylbenzylsulfid oder Alkyldisulfiden wie Hexandisulfid, Heptandisulfid, Octandisulfid und dergleichen Alkyldisulfiden ab.

Als Ammoniumperchlorate sind im Rahmen der vorliegenden Erfindung grundsätzlich alle Verbindungen einsetzbar, die durch entsprechende Umsetzung geeigneter Reaktanden zu einem Ammoniumperchlorat führen. Dabei können erfindungsgemäß einsetzbare Ammoniumperchlorate beispielsweise durch entsprechende Umsetzung von Aminen oder Amiden wie Alkylmonoaminen, Alkylendiaminen, Alkylpolyaminen, sekundären oder tertiären Aminen erhalten werden. Geeignete Ammoniumperchlorate leiten sich daher beispielsweise von primären Mono- oder Polyaminoverbindungen mit 2 bis etwa 40, beispielsweise 6 bis etwa 20 C-Atomen ab. Beispielsweise sind dies Ethylamin, n-Propylamin, i-Propylamin, n-Butylamin, sek.-Butylamin, tert.-Butylamin, substituierte Amine mit 2 bis etwa 20 C-Atomen wie 2-(N,N-Dimethylamino)-1-aminoethan. Geeignete Diamine weisen beispielsweise zwei primäre, zwei sekundäre, zwei tertiäre oder eine primäre und eine sekundäre oder eine primäre und eine tertiäre oder eine sekundäre und eine tertiäre Aminogruppe auf. Beispiele hierfür sind Diaminoethan, die isomeren Diaminopropane, die isomeren Diaminobutane, die isomeren Diaminohexane, Piperazin, 2,5-Dimethylpiperazin, Amino-3-aminomethyl-3,5,5-trimethylcyclohexan (Isophorondiamin, IPDA), 4,4'-Diaminodicyclohexylmethan, 1,4-Diaminocyclohexan, Aminoethylethanolamin, Hydrazin, Hydrazinhydrat oder Triamine wie die Diethylentriamin oder 1,8-Diamino-4-aminomethyloctan oder tertiäre Amine wie Triethylamin, Tributylamin, Dimethylbenzylamin, N-Ethyl-, N-Methyl-, N-Cyclohexylmorpholin, Dimethylcyclohexylamin, Dimorpholinodiethylether, 1,4-Diazabicyclo[2,2,2]octan, 1-Azabicyclo[3,3,0]octan, N,N,N`,N`-Tetramethylethylendiamin, N,N,N',N'-Tetramethylbutandiamin, N,N,N',N'-Tetramethylhexandiamin-1,6, Pentamethyldiethylentriamin, Tetramethyldiaminoethylether, Bis-(dimethylaminopropyl)-harnstoff, N,N'-Dimethylpiperazin, 1,2-Dimethylimidazol oder Di-(4-N,N-dimethylaminocyclohexyl)-methan.

Ebenfalls geeignet sind aliphatische Aminoalkohole mit 2 bis etwa 40, vorzugsweise 2 bis etwa 20 C-Atomen, beispielsweise Ethanolamin, Diethanolamin, Triethanolamin, Tripropanolamin, Tributanolamin, Tripentanolamin, 1-Amino-3,3-dimethyl-pentan-5-ol, 2-Aminohexan-2',2"-diethanolamin, 1-Amino-2,5-dimethylcyclohexan-4-ol, 2-Aminopropanol, 2-Aminobutanol, 3-Aminopropanol, 1-Amino-2-propanol, 2-Amino-2-methyl-1-propanol, 5-Aminopentanol, 3-Aminomethyl-3,5,5-trimethylcyclohexanol, 1-Amino-1-cyclopentan-methanol, 2-Amino-2-ethyl-1,3-propandiol, 2-(Dimethylaminoethoxy)-ethanol, aromatisch-aliphatische oder aromatisch-cycloaliphatische Aminoalkohole mit 6 bis etwa 20 C-Atomen, wobei als aromatische Strukturen heterocyclische oder isocyclische Ringsysteme wie Naphthalin- oder insbesondere Benzolderivate wie 2-Aminobenzylalkohol, 3-(Hydroxymethyl)anilin, 2-Amino-3-phenyl-1-propanol, 2-Amino-1-phenylethanol, 2-Phenylglycinol oder 2-Amino-1-phenyl-1,3-propandiol sowie Gemische aus zwei oder mehr solcher Verbindungen eingesetzt werden.

Im Rahmen einer bevorzugten Ausführungsform der vorliegenden Erfindung wird im rahmen des erfindungsgemäßen Verfahren beispielsweise als Zusatzstoff Natriumperchlorat eingesetzt.

Der Anteil eines Salzes einer halogenhaltigen Oxysäure oder eines Gemischs aus zwei oder mehr halogenhaltigen Oxysäuren an der im Rahmen des erfindungsgemäßen Verfahrens erzeugten Schmelze beträgt etwa 0,01 bis etwa 20 Gew.-%, beispielsweise etwa 0,1 bis etwa 10 Gew.-% oder etwa 1 bis etwa 5 Gew.-%, beispielsweise etwa 1 bis etwa 3 Gew.-%.

Im Rahmen einer weiteren Ausführungsform der vorliegenden Erfindung kann eine erfindungsgemäß zu konfektionierende Stabilisator-Schmelze organische Phosphitester mit 1 bis 3 identischen, paarweise identischen oder unterschiedlichen organischen Resten enthalten. Geeignete organische Reste sind beispielsweise lineare oder verzweigte, gesättigte oder ungesättigte Alkylreste mit 1 bis 24 C-Atomen, gegebenenfalls substituierten Alkylreste mit 6 bis 20 C-Atomen oder gegebenenfalls substituierte Aralkylreste mit 7 bis 20 C-Atomen. Beispiele für geeignete organische Phosphitester sind Tris-(nonylphenyl)-, Trilauryl-, Tributyl-, Trioctyl-, Tridecyl-, Tridodecyl-, Triphenyl-, Octyldiphenyl-, Dioctylphenyl-, Tri-(octylphenyl)-, Tribenzyl-, Butyldikresyl-, Octyl-di(octylphenyl)-, Tris-(2-ethylhexyl)-, Tritolyl-, Tris-(2-cyclohexylphenyl)-, Tri-α-naphthyl-, Tris-(phenylphenyl)-, Tris-(2-phenylethyl)-, Tris-(dimethylphenyl)-, Trikresyl- oder Tris-(p-nonylphenyl)-phosphit oder Tristearyl-sorbit-triphosphit oder Gemische aus zwei oder mehr davon.

Eine erfindungsgemäß zu konfektionierende Stabilisator-Schmelze kann die beschriebenen Phosphitverbindungen in einer Menge von 0 bis zu etwa 30 Gew.-%, insbesondere etwa 0,1 bis etwa 10 Gew.-%, enthalten.

Eine erfindungsgemäß zu konfektionierende Stabilisator-Schmelze kann weiterhin als Zusatzstoffe blockierte Mercaptane enthalten, wie sie in der EP-A 0 742 259 auf den Seiten 4 bis 18 genannt werden. Auf die Offenbarung in der angegebenen Schrift wird ausdrücklich Bezug genommen.

Eine erfindungsgemäß zu konfektionierende Stabilisator-Schmelze kann die beschriebenen blockierten Mercaptane in einer Menge von 0 bis zu etwa 30 Gew.-%, insbesondere etwa 0,1 bis zu etwa 10 Gew.-%, enthalten.

Ebenfalls als Zusatzstoffe für erfindungsgemäß zu konfektionierende Stabilisator-Schmelzen geeignet sind organische Weichmacher.

Als entsprechende Weichmacher geeignet sind beispielsweise Phosphorsäureester, wie sie im "Taschenbuch der Kunststoffadditive", Kapitel 5.9.5, S. 408-412 zu finden sind. Beispiele für geeignete Phosphorsäureester sind Tributylphosphat, Tri-2-ethylbutylphosphat, Tri-2-ethylhexylphosphat, Trichlorethylphosphat, 2-Ethyl-hexyl-diphenylphosphat, Triphenylphosphat, Trikresylphosphat oder Trixylenylphosphat, oder Gemische aus zwei oder mehr davon.

Im Rahmen einer weiteren Ausführungsform der vorliegenden Erfindung können die erfindungsgemäß zu konfektionierenden Stabilisator-Schmelzen Antioxidantien, UV-Absorber oder Lichtschutzmittel enthalten. Geeignete Antioxidantien sind beispielsweise in der EP-A 1 046 668 auf den Seiten 33 bis 35 beschrieben. Geeignete UV-Absorber und Lichtschutzmittel sind dort auf den Seiten 35 und 36 genannt. Auf beide Offenbarungen wird hier ausdrücklich Bezug genommen.

Eine erfindungsgemäß zu konfektionierende Stabilisator-Schmelze kann weiterhin Füllstoffe, wie sie im "Handbook of PVC Formulating", E. J. Wickson, John Wiley & Sons, Inc., 1993, auf den Seiten 393-449 beschrieben sind, oder Verstärkungsmittel, wie sie im "Taschenbuch der Kunststoffadditive", R. Gächter/H. Müller, Carl Hanser Verlag, 1990, Seiten 549-615 beschrieben sind, oder Pigmente enthalten.

Weiterhin als Zusatzstoffe in der erfindungsgemäß zu konfektionierenden Stabilisator-Schmelze bzw. in den erfindungsgemäßen Stabilisator-Formkörpern geeignet sind Hydrotalcite, Zeolithe und Alkalialumocarbonate. Geeignete Hydrotalcite, Hydrocalumite, Zeolithe und Alkalialumocarbonate sind beispielsweise in der EP-A 1 046 668 auf den Seiten 27 bis 29, der EP-A 256 872 auf den Seiten 3, 5 und 7, der DE-C 41 06 411 auf Seite 2 und 3 oder der DE-C 41 06 404 auf Seite 2 und 3 oder der DE-C 198 60 798 beschrieben. Auf diese Druckschriften wird ausdrücklich Bezug genommen.

Eine erfindungsgemäß zu konfektionierende Stabilisator-Schmelze kann darüber hinaus noch Schlagzähmodifikatoren und Verarbeitungshilfen, Geliermittel, Antistatika, Biozide, Metalldesaktivatoren, optische Aufheller, Flammschutzmittel sowie Antifoggingverbindungen enthalten. Geeignete Verbindungen dieser Verbindungsklassen sind beispielsweise in "Kunststoff Additive", R. Keßler/H. Müller, Carl Hanser Verlag, 3. Auflage, 1989, sowie im "Handbook of PVC Formulating", E.J. Wilson, J. Wiley & Sons, 1993, beschrieben.

Die Erfindung betrifft außerdem eine Schmelze, mindestens enthaltend ein Salz der allgemeinen Formel CaₓAl₂(OH)_{2(x+3)-ny}A_{y}ⁿ⁻*mH₂O, worin x für eine Zahl von 2 bis 12, y für eine Zahl zwischen 0 und (2x+5)/2, m für eine Zahl von 0 bis 12 und n für eine Zahl von 1 bis 3 steht, und mindestens enthaltend eine organische Verbindung mit einem Schmelzpunkt von weniger als 200°C, wobei der Gehalt der Schmelze an organischer Verbindung mit einem Schmelzpunkt von weniger als 200°C und mindestens einem Salz der allgemeinen Formel CaₓAl₂(OH)_{2(x+3)-ny}A_{y}ⁿ⁻*mH₂O, worin x für eine Zahl von 2 bis 12, y für eine Zahl zwischen 0 und (2x+5)/2, m für eine Zahl von 0 bis 12 und n für eine Zahl von 1 bis 3 steht, 10 bis 100 Gew.-% beträgt;
sowie einen Schmelzformkörper, mindestens enthaltend ein Salz der allgemeinen Formel CaₓAl₂(OH)_{2(x+3)-ny}A_{y}ⁿ⁻*mH₂O, worin x für eine Zahl von 2 bis 12, y für eine Zahl zwischen 0 und (2x+5)/2, m für eine Zahl von 0 bis 12 und n für eine Zahl von 1 bis 3 steht, und mindestens enthaltend eine organische Verbindung mit einem Schmelzpunkt von weniger als 200°C, wobei der Gehalt der Schmelze an organischer Verbindung mit einem Schmelzpunkt von weniger als 200°C und mindestens einem Salz der allgemeinen Formel CaₓAl₂(OH)_{2(x+3)-ny}A_{y}ⁿ⁻*mH₂O, worin x für eine Zahl von 2 bis 12, y für eine Zahl zwischen 0 und (2x+5)/2, m für eine Zahl von 0 bis 12 und n für eine Zahl von 1 bis 3 steht, 10 bis 100 Gew.-% beträgt..

Diese Formkörper können grundsätzlich beliebig ausgestaltet sein. Geeignete Formen sind beispielsweise Pastillen, Schuppen, Kugeln, Zylinder und dergleichen.

Derartige Formen können durch bekannte Formgebungsverfahren erzeugt werden, z.B. dadurch, dass eine thermoplastische Masse in eine Form gegeben wird und dort unter Abkühlen oder Abkühlen lassen in der so gewonnenen Form fixiert wird, wie es z.B. beim Spritzgießen der Fall ist. Die Formgebung kann aber auch dadurch erfolgen, dass die thermoplastische Masse verteilt wird und sich beim Abkühlen in der so erlangten Form fixiert - dies ist z.B. durch den Einsatz von Sprühtürmen möglich, bei dem im Wesentlichen kugelförmige Formen erhalten werden. Darüber hinaus ist es auch möglich, die thermoplastische Masse während des Erkaltens weiter in ihrer Form zu verändern, beispielsweise durch schuppen. Ebenfalls geeignet sind beispielsweise Pastillierverfahren wie sie durch Rotoformer (Fa. Sandvik) oder Rollomaten (Fa. Kaiser) durchführbar sind.

Ebenfalls geeignet ist auch ein "Vertropfung" genanntes Verfahren. Bei diesem Verfahren wird die Stabilisator-Schmelze mit Hilfe einer mit Löchern versehenen, vibrierenden Platte zu Tropfen geformt. Die Platte vibriert dabei in Richtung der Plattennormalen, wobei in Abhängigkeit von der Viskosität der Schmelze und der Vibrationsfrequenz besonders regelmäßig geformte Tropfen mit einer engen Größenverteilung erhalten werden können.

Zur Durchführung dieses Verfahrens geeignet ist beispielsweise die Anlage Mini-Droppoline der Firma Rieter Automatik GmbH in Grossostheim (Deutschland). Beispielsweise wird dabei mit einer Vibrationsfrequenz von etwa 100 - 500 Hz, beispielsweise etwa 250 bis etwa 400 Hz, einem Düsendurchmesser von etwa 200 bis 600 µm, insbesondere einem Düsendurchmesser von etwa 250 bis etwa 400 µm, einem Druck (je nach Viskosität der Schmelze) von etwa 0,4 bis etwa 5 bar, und einer in einem Intervall von etwa -10 bis etwa +10 °C um den Schmelzpunkt der Schmelz liegenden Düsentemperatur.

Im Rahmen einer weiteren bevorzugten Ausführungsform der vorliegenden Erfindung werden die Tropfen vor dem Auftreffen auf eine Auffangvorrichtung gekühlt.

Damit die so erhaltenen Formkörper bei ihrem späteren Einsatz gut handhabbar sind, also z.B. gute Fördereigenschaften aufweisen, sind solche Formen bevorzugt, die ein leichtes Schütten und/oder Fördern unter Einsatz von Unter- bzw. Überdruck oder Kombinationen von beidem ermöglichen. Besonders bevorzugt sind dabei Kugelformen oder Pastillenformen.

Bei dem erfindungsgemäßen Verfahren werden beispielsweise die zu pastillierenden Bestandteile in einen Behälter gegeben, mit Hilfe eines Heizmittels erschmolzen und aus dieser Stabilisator-Schmelze Stabilisator-Formkörper hergestellt.

Beim Erschmelzen werden Temperaturen von mehr als 100°C, vorzugsweise mehr als 110°C, besonders bevorzugt mehr als 120°C, wie 130°C, 140°C oder 150°C erreicht. Dies kann durch Verwendung üblicher Heizmittel erreicht werden, also z.B. durch elektrisches Erwärmen, durch Beheizen mit einer Flamme, Dampf oder Öl oder durch das Bestrahlen mit elektromagnetischen Wellen, wie Mikrowellen, Induktionsbeheizung, aber auch dadurch, dass verschiedene Bestandteile zusammengegeben werden, die in der Stabilisator-Schmelze exotherm miteinander reagieren und dabei einen gewünschten oder zumindest nicht störenden Stabilisator-Schmelzenbestandteil bilden.

Die Verwendung einer Stabilisator-Schmelze, wie oben beschrieben, oder von Stabilisator-Formkörpern, wie oben beschrieben, bei der Herstellung von polymeren Formkörpern oder Oberflächenbeschichtungsmitteln stellt einen weiteren Gegenstand der vorliegenden Erfindung dar.

Dabei können z.B. die erfindungsgemäßen Formkörper mit einem oder mehreren Polymeren vermischt werden, die stabilisiert werden müssen, um im Langzeitgebrauch und insbesondere bei der Verarbeitung keine unerwünschten Veränderungen zu zeigen. Dabei erfordern eine solche Stabilisierung insbesondere halogenhaltige organische Polymere.

Beispiele für derartige halogenhaltige organische Polymere sind Polymere des Vinylchlorids, Vinylharze, die Vinylchlorideinheiten im Polymerrückgrat enthalten, Copolymere von Vinylchlorid und Vinylestern aliphatischer Säuren, insbesondere Vinylacetat, Copolymere von Vinylchlorid mit Estern der Acryl- und Methacrylsäure oder Acrylnitril oder Gemischen aus zwei oder mehr davon, Copolymere des Vinylchlorids mit Dienverbindungen oder ungesättigten Dicarbonsäuren oder deren Anhydriden, beispielsweise Copolymere des Vinylchlorids mit Diethylmaleat, Diethylfumarat oder Maleinsäureanhydrid, nachchlorierte Polymere und Copolymere des Vinylchlorids, Copolymere des Vinylchlorids und Vinylidenchlorids mit ungesättigten Aldehyden, Ketonen und anderen Verbindungen wie Acrolein, Crotonaldehyd, Vinylmethylketon, Vinylmethylether, Vinylisobutylether und dergleichen, Polymere und Copolymere des Vinylidenchlorids mit Vinylchlorid und anderen polymerisierbaren Verbindungen, Polymere des Vinylchloracetats und Dichlordivinylethers, chlorierte Polymere des Vinylacetats, chlorierte polymere Ester der Acrylsäure und der α-substituierten Acrylsäuren, chlorierte Polystyrole, beispielsweise Polydichlorstyrol, chlorierte Polymere des Ethylens, Polymere und nachchlorierte Polymere von Chlorbutadien und deren Copolymere mit Vinylchlorid sowie Mischungen aus zwei oder mehr der genannten Polymeren oder Polymermischungen, die eines oder mehrere der obengenannten Polymeren enthalten.

Ebenfalls zur Stabilisierung mit den erfindungsgemäßen Stabilisator-Schmelzen und/oder den erfindungsgemäßen Stabilisator-Formkörpern geeignet sind die Pfropfpolymerisate von PVC mit EVA, ABS oder MBS. Bevorzugte Substrate für derartige Propfcopolymere sind außerdem die vorstehend genannten Homo- und Copolymerisate, insbesondere Mischungen von Vinylchlorid-Homopolymerisaten mit anderen thermoplastischen oder elastomeren Polymeren, insbesondere Blends mit ABS, MBS, NBR, SAN, EVA, CPE, MBAS, PAA (Polyalkylacrylat), PAMA (Polyalkylmethacrylat), EPDM, Polyamiden oder Polylactonen.

Ebenfalls zur Stabilisierung mit den aus den erfindungsgemäßen Stabilisator-Schmelzen erhältlichen Stabilisator-Formkörpern geeignet sind Gemische von halogenierten und nicht-halogenierten Polymeren, beispielsweise Gemische der oben genannten nicht-halogenierten Polymeren mit PVC, insbesondere Gemische von Polyurethanen und PVC.

Weiterhin können mit den erfindungsgemäßen Stabilisator-Schmelzen und/oder den erfindungsgemäßen Stabilisator-Formkörpern auch Rezyklate chlorhaltiger Polymere stabilisiert werden, wobei grundsätzlich alle Rezyklate der obengenannten, halogenierten Polymeren hierzu geeignet sind. Geeignet ist im Rahmen der vorliegenden Erfindung beispielsweise PVC-Rezyklat.

Neben dieser Verwendung der erfindungsgemäßen Stabilisator-Schmelzen und/oder der erfindungsgemäßen Stabilisator-Formkörper bildet auch ein Verfahren zur Stabilisierung halogenhaltiger Polymeren, bei dem ein halogenhaltiges Polymeres oder ein Gemisch aus zwei oder mehr halogenhaltigen Polymeren oder ein Gemisch aus einem oder mehreren halogenhaltigen Polymeren und einem oder mehreren halogenfreien Polymeren mit mindestens einem erfindungsgemäßen Stabilisator-Formkörper vermischt wird, einen Gegenstand der vorliegenden Erfindung.

Die Vermischung von Polymerem oder Polymeren und der erfindungsgemäßen Stabilisator-Schmelze oder mit erfindungsgemäßen Stabilisator-Formkörpern kann grundsätzlich zu jedem beliebigen Zeitpunkt vor oder während der Verarbeitung des/der Polymeren erfolgen. So können z.B. die Stabilisator-Formkörper dem in Pulver- oder Granulatform vorliegenden Polymeren vor der Verarbeitung zugemischt werden. Es ist jedoch ebenso möglich, die Stabilisator-Formkörper dem Polymeren oder den Polymeren in erweichtem oder geschmolzenem Zustand, beispielsweise während der Verarbeitung in einem Extruder zuzusetzen.

Eine Polymerzusammensetzung, mindestens enthaltend ein halogenhaltiges, organisches Polymeres und die in einem Verfahren, wie oben beschrieben, eingesetzten Stabilisierungs-Bestandteile oder die Stabilisierungs-Bestandteile der erfindungsgemäßen Stabilisator-Schmelze oder die Stabilisierungs-Bestandteile eines erfindungsgemäßen Stabilisator-Formkörpers stellt einen weiteren Gegenstand der vorliegenden Erfindung dar.

Im Rahmen einer bevorzugten Ausführungsform der vorliegenden Erfindung enthält eine erfindungsgemäße Polymerzusammensetzung die Bestandteile der erfindungsgemäßen Stabilisator-Schmelze oder der erfindungsgemäßen Stabilisator-Formkörper in einer Menge von 0,1 bis 20 phr, insbesondere etwa 0,5 bis etwa 15 phr oder etwa 1 bis etwa 12 phr. Dabei sind Werte von mindestens 0,3 phr, wie mindestens etwa 0,4 oder mindestens etwa 0,75 phr bevorzugt. Die Einheit phr steht für "per hundred resin" und betrifft damit Gewichtsteile pro 100 Gewichtsteile Polymeres.

Vorzugsweise enthält eine erfindungsgemäße Polymerzusammensetzung als halogeniertes Polymeres zumindest teilweise PVC, wobei der PVC-Anteil insbesondere mindestens etwa 20, vorzugsweise mindestens etwa 50 Gew.-%, beispielsweise mindestens etwa 80 oder mindestens etwa 90 Gew.-% beträgt.

Besonders bevorzugt ist demnach eine Polymerzusammensetzung, welche die Stabilisierungs-Bestandteile, also die Bestandteile der erfindungsgemäßen Stabilisator-Schmelze oder der erfindungsgemäßen Stabilisator-Formkörper, in einer Menge von 0,1 bis etwa 30 Gew.-% enthält.

Ein weiterer Gegenstand der vorliegenden Erfindung ist ein Formkörper, der eine erfindungsgemäße Polymerzusammensetzung enthält.

Eine erfindungsgemäße Polymerzusammensetzung kann auf bekannte Weise in eine gewünschte Form gebracht werden. Geeignete Verfahren sind beispielsweise Kalandrieren, Extrudieren, Spritzgießen, Sintern, Extrusions-Blasen oder das Plastisol-Verfahren. Eine erfindungsgemäße Polymerzusammensetzung kann beispielsweise auch zur Herstellung von Schaumstoffen verwendet werden. Grundsätzlich eignen sich die erfindungsgemäßen Polymerzusammensetzungen zur Herstellung von Hart- oder insbesondere Weich-PVC.

Der Begriff "Formkörper" umfasst im Rahmen der vorliegenden Erfindung grundsätzlich alle dreidimensionalen Gebilde, die aus einer erfindungsgemäßen Polymerzusammensetzung herstellbar sind.

Der Begriff "Formkörper" umfasst im Rahmen der vorliegenden Erfindung beispielsweise Drahtummantelungen, Automobilbauteile, beispielsweise Automobilbauteile wie sie im Innenraum des Automobils, im Motorraum oder an den Außenflächen eingesetzt werden, Kabelisolierungen, Dekorationsfolien, Agrarfolien, Schläuche, Dichtungsprofile, Bürofolien, Hohlkörper (Flaschen), Verpackungsfolien (Tiefziehfolien), Blasfolien, Rohre, Schaumstoffe, Schwerprofile (Fensterrahmen), Lichtwandprofile, Bauprofile, Sidings, Fittings, Platten, Schaumplatten., Coextrudate mit recyceltem Kern oder Gehäuse für elektrische Apparaturen oder Maschinen, beispielsweise Computer oder Haushaltsgeräte. Weitere Beispiele für aus einer erfindungsgemäßen Polymerzusammensetzung herstellbare Formkörper sind Kunstleder, Bodenbeläge, Textilbeschichtungen, Tapeten, Coil-Coatings oder Unterbodenschutz für Kraftfahrzeuge.

Die vorliegende Erfindung wird im Folgenden durch Beispiele näher erläutert:

### Beispiele:

Gemäß den nachfolgenden Rezepturen wurden Polymerzusammensetzungen hergestellt und auf ihre Anwendungseigenschaften hin untersucht. Rezeptur B1 wurde dabei unter Verwendung eines erfindungsgemäß hergestellten Schmelzprodukts als Stabilisatorzusammensetzung erhalten.

Das erfindungsgemäß hergestellte Schmelzprodukt gemäß B1 weist dabei die folgende Zusammensetzung (in Gewichtsteilen) auf:

| | |
|---|---|
| Calciumaluminiumhydroxidphosphit | 0,70 |
| Zinkstearat | 0,70 |
| Calcium-12-Hydroxystearat | 0,30 |
| beta-Diketon | 0,35 |
| THEIC | 0,18 |
| Irganox 1076 | 0,15 |
| Esterwachs | 0,35 |
| Kohlenwasserstoffwachs | 0,10 |
| Organophosphit | 0,15 |
| Fließhilfe | 0,60 |

### Herstellung des erfindungsgemäßen Schmelzprodukts:

Die Menge der einzelnen Zutaten wurde in Gewichtsteilen entsprechend den in der vorstehenden Tabelle angegebenen Mengen gewählt, wobei im konkreten Fall die angegebenen Gewichtsteile mit dem Faktor 100g multipliziert wurden, um eine ausreichende Materialmenge zu erhalten.

Die beiden Wachse wurden bei 130°C aufgeschmolzen. Zinkstearat wurde zugegeben und gerührt, bis die Schmelze wieder 130°C erreicht hatte. Nun erfolgte die Dosierung von Irganox ®, beta-Diketon, Organophosphit und THEIC. Nachdem die Temperatur wieder auf 130°C angestiegen war, wurden Calcium-12-Hydroxystearat und die Fließhilfe zugesetzt, anschließend Calciumaluminiumhydroxidphosphit. Die Schmelze wurde ausgegossen, dünn verstrichen und nach Abkühlen gebrochen.

Rezeptur V1 wurde als Vergleichsbeispiel unter Verwendung einer Szabilisatorzusammensetzung erhalten, deren Bestandteile denen des erfindungsgemäßen Schmelzprodukts entsprechen, die Bestandteile wurden jedoch in Pulverform eingesetzt.

Rezeptur V2 entspricht im Wesentlichen der Rezeptur V1, hier wurde lediglich im Rahmen der Stabilisatorzusammensetzung anstatt Calciumaluminiumhydroxidphosphit Hydrotalcit eingesetzt. Der Versuch aus einer derart zusammengesetzten Stabilisatorzusammensetzung ein Schmelzprodukt zu erhalten scheiterte, der Aggregatzustand des erwärmten Gemischs ließ eine sinnvolle Formung bzw. einfache formgebende Behandlung nicht zu.

| | **B1** | **V1** | **V2** |
|---|---|---|---|
| PVC, k-Wert 67 | 100,00 | 100,00 | 100,00 |
| Impactmodifier | 5,70 | 5,70 | 5,70 |
| Kreide | 4,00 | 4,00 | 4,00 |
| Titandioxid | 4,50 | 4,50 | 4,50 |
| Schönungspigment Schwarz | 0,06 | 0,06 | 0,06 |
| Schönungspigment Blau | 0,02 | 0,02 | 0,02 |
| Schmelzprodukt erfindungsgemäß | 3,60 | | |
| Calciumaluminiumhydroxidphosphit | | 0,70 | |
| Zinkstearat | | 0,70 | 0,70 |
| Calcium-12-Hydroxystearat | | 0,30 | 0,30 |
| beta-Diketon | | 0,35 | 0,35 |
| THEIC | | 0,18 | 0,18 |
| Irganox 1076 | | 0,15 | 0,15 |
| Esterwachs | | 0,35 | 0,35 |
| Kohlenwasserstoffwachs | | 0,10 | 0,10 |
| Organophosphit | | 0,15 | 0,15 |
| Fließhilfe | | 0,60 | 0,60 |
| Hydrotalcit | | | 0,70 |

Zur Bestimmung der Materialeigenschaften wurden die Thermostabilität sowie die Farbwerte der Proben bestimmt.

### Thermostabilität nach DIN 53381 Teil 1 Verfahren A (HCL-Test)

**Prüfgerät:** Metallblock- Thermostat (Fa. Liebisch) **Proben:** Je Probe drei Probenstücke mit Masse 50mg ± 5mg **Prüftemperatur:** 200°C ± 0,5°C **Auswertung:** Einzelwerte sowie Mittelwerte aus den Stabilitätszeiten der drei Probenstücke [min] **Lagerungsart: Lagerungsintervall:** 0

| **Proben Nr.** | **Wert 1 [min]** | **Wert 2 [min]** | **Wert 3 [min]** | **Mittelwert** |
|---|---|---|---|---|
| 1 | 20 | 22 | 22 | 21 |
| 2 | 20 | 21 | 22 | 21 |
| 3 | 20 | 21 | 21 | 21 |

### Farbwerte nach DIN 5033

**Prüfgerät:** Spectrometer (Fa. Data Color Spectraflash SF 450) **Messgeometrie:** Diffuse Beleuchtung durch Fotometerkugel, Messung unter 8 Grad **Lichtart:** D65 = Natürliches Tageslicht **Auswertung:** Ermittlung der Normfarbwerte und Ausgabe in Cie Lab

| **Rezeptur** | **L** | **a** | **b** |
|---|---|---|---|
| 1 | 94,23 | 0,70 | 3,28 |
| 2 | 94,63 | 0,81 | 2,31 |
| 3 | 94,78 | 0,78 | 2,57 |

Die Ergebnisse zeigen, dass sich die Stabilisierungswirkung der erfindungsgemäß hergestellten Schmelzprodukte nicht von denen der konventionell aufgebauten Produkte (Pulverform bzw. Hydrotalcit als Inhaltsstoff) unterscheidet. Die Handhabung der erfindungsgemäß hergestellten Schmelzprodukte ist jedoch staubfrei und die Dosierung einfach. Der zu betreibende Aufwand bei der Verarbeitung der erfindungsgemäß hergestellten Stabilisatorzusammensetzungen ist damit deutlich geringer als bei konventionellen Stabilisatorzusammensetzungen.

## Patentansprüche

1. Verfahren zur Konfektionierung von Schmelzen, die mindestens ein Salz der allgemeinen Formel CaₓAl₂(OH)_{2(x+3)-ny}A_{y}ⁿ⁻*mH₂O, worin x für eine Zahl von 2 bis 12, y für eine Zahl zwischen 0 und (2x+5)/2, m für eine Zahl von 0 bis 12 und n für eine Zahl von 1 bis 3 steht, enthalten, bei dem eine mindestens ein Salz der allgemeinen Formel CaₓAl₂(OH)_{2(x+3)-ny}A_{y}ⁿ⁻*m H₂O, worin x für eine Zahl von 2 bis 12, y für eine Zahl zwischen 0 und (2x+5)/2, m für eine Zahl von 0 bis 12 und n für eine Zahl von 1 bis 3 steht, oder ein Gemisch aus zwei oder mehr solcher Salze und mindestens eine organische Verbindung oder ein Gemisch aus zwei oder mehr solcher Verbindungen mit einem Schmelzpunkt von weniger als 200°C enthaltende Schmelze zu Portionen portioniert wird und die Portionen anschließend unter Erhalt eines Schmelzformkörpers abgekühlt werden, wobei der Gehalt der Schmelze an organischer Verbindung mit einem Schmelzpunkt von weniger als 200°C und mindestens einem Salz der allgemeinen Formel CaₓAl₂(OH)_{2(x+3)-ny}A_{y}ⁿ⁻*m H₂O, worin x für eine Zahl von 2 bis 12, y für eine Zahl zwischen 0 und (2x+5)/2, m für eine Zahl von 0 bis 12 und n für eine Zahl von 1 bis 3 steht, 10 bis 100 Gew.-% beträgt.

2. Verfahren nach Anspruch 1, **dadurch gekennzeichnet, dass** A für ein Anion, ausgewählt aus der Gruppe, bestehend aus Carbonat, Phosphit oder Citrat, steht.

3. Verfahren nach einem der vorstehenden Ansprüche, **dadurch gekennzeichnet, dass** die Schmelze mindestens eine Zinkverbindung enthält.

4. Verfahren nach einem der vorstehenden Ansprüche, bei dem es sich bei dem Schmelzformkörper im Wesentlichen um Pastillen, Schuppen, Kugeln oder Zylinder handelt.

5. Verfahren nach einem der vorstehenden Ansprüche, **dadurch gekennzeichnet, dass** die zu konfektionierenden Bestandteile in einen Behälter gegeben werden, die zu konfektionierenden Bestandteile geschmolzen werden und aus dieser Schmelze Schmelzformkörper hergestellt werden.

6. Verfahren nach einem der vorstehenden Ansprüche, **dadurch gekennzeichnet, dass** der Gehalt der Schmelze an Salzen der allgemeinen Formel CaₓAl₂(OH)_{2(x+3)-ny}A_{y}ⁿ⁻*mH₂O, worin x für eine Zahl von 2 bis 12, y für eine Zahl zwischen 0 und (2x+5)/2, m für eine Zahl von 0 bis 12 und n für eine Zahl von 1 bis 3 steht, 40 Gew.-% oder weniger beträgt.

7. Verfahren nach einem der vorstehenden Ansprüche, **dadurch gekennzeichnet, dass** die Schmelze mindestens einen weiteren zur Stabilisierung von halogenhaltigen Polymeren oder deren Verarbeitbarkeit verbessernden Zusatzstoff enthält.

8. Verfahren nach Anspruch 7, **dadurch gekennzeichnet, dass** der Zusatzstoff ausgewählt ist aus der Gruppe, bestehend aus Aminouracilverbindungen, Verbindungen mit einem Strukturelement der allgemeinen Formel II 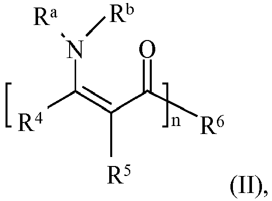 Verbindungen mit einem mercaptofunktionellen sp²-hybridisierten C-Atom, oder 2,4-Pyrrolidindionen oder 2,4-Pyrrolidindion-Derivaten, Epoxyverbindungen, 1,3-Dicarbonylverbindungen, sterisch gehinderten Aminen, Organozinnverbindungen, organischen Phosphitestern, blockierten Mercaptanen, organischen Weichmachern, Antioxidantien, UV-Absorbern oder Lichtschutzmitteln, Füllstoffen, Hydrotalciten, Zeolithen und Alkalialumocarbonaten, Schlagzähmodifikatoren und Verarbeitungshilfen, Geliermitteln, Antistatika, Bioziden, Metalldesaktivatoren, optischen Aufhellern, Flammschutzmitteln, Treibmitteln sowie Antifoggingverbindungen.

9. Schmelze, mindestens enthaltend ein Salz der allgemeinen Formel CaₓAl₂(OH)_{2(x+3)-ny}A_{y}ⁿ⁻*mH₂O, worin x für eine Zahl von 2 bis 12, y für eine Zahl zwischen 0 und (2x+5)/2, m für eine Zahl von 0 bis 12 und n für eine Zahl von 1 bis 3 steht, und mindestens enthaltend eine organische Verbindung mit einem Schmelzpunkt von weniger als 200°C, wobei der Gehalt der Schmelze an organischer Verbindung mit einem Schmelzpunkt von weniger als 200°C und mindestens einem Salz der allgemeinen Formel CaₓAl₂(OH)_{2(x+3)-ny}A_{y}ⁿ⁻*mH₂O, worin x für eine Zahl von 2 bis 12, y für eine Zahl zwischen 0 und (2x+5)/2, m für eine Zahl von 0 bis 12 und n für eine Zahl von 1 bis 3 steht, 10 bis 100 Gew.-% beträgt.

10. Schmelzformkörper, mindestens enthaltend ein Salz der allgemeinen Formel CaₓAl₂(OH)_{2(x+3)-ny}A_{y}ⁿ⁻*mH₂O, worin x für eine Zahl von 2 bis 12, y für eine Zahl zwischen 0 und (2x+5)/2, m für eine Zahl von 0 bis 12 und n für eine Zahl von 1 bis 3 steht, und mindestens enthaltend eine organische Verbindung mit einem Schmelzpunkt von weniger als 200°C, wobei der Gehalt der Schmelze an organischer Verbindung mit einem Schmelzpunkt von weniger als 200°C und mindestens einem Salz der allgemeinen Formel CaₓAl₂(OH)_{2(x+3)-ny}A_{y}ⁿ⁻*mH₂O, worin x für eine Zahl von 2 bis 12, y für eine Zahl zwischen 0 und (2x+5)/2, m für eine Zahl von 0 bis 12 und n für eine Zahl von 1 bis 3 steht, 10 bis 100 Gew.-% beträgt.

11. Polymerzusammensetzung, herstellbar durch Vermischen eines halogenhaltigen organischen Polymeren mit einem Schmelzformkörper gemäß Anspruch 10 oder einem gemäß einem der Ansprüche 1 bis 8 hergestellten Schmelzformkörper.

12. Verwendung einer ein Salz der allgemeinen Formel CaₓAl₂(OH)_{2(x+3)-ny}A_{y}ⁿ⁻*mH₂O, worin x für eine Zahl von 2 bis 12, y für eine Zahl zwischen 0 und (2x+5)/2, m für eine Zahl von 0 bis 12 und n für eine Zahl von 1 bis 3 steht, und mindestens eine organische Verbindung mit einem Schmelzpunkt von weniger als 200°C enthaltenden Schmelze, wobei der Gehalt der Schmelze an organischer Verbindung mit einem Schmelzpunkt von weniger als 200°C und mindestens einem Salz der allgemeinen Formel CaₓAl₂(OH)_{2(x+3)-ny}A_{y}ⁿ⁻*mH₂O, worin x für eine Zahl von 2 bis 12, y für eine Zahl zwischen 0 und (2x+5)/2, m für eine Zahl von 0 bis 12 und n für eine Zahl von 1 bis 3 steht, 10 bis 100 Gew.-% beträgt, zur Herstellung von polymeren Formkörpern oder Oberflächenbeschichtungsmitteln.

13. Verfahren zur Stabilisierung halogenhaltiger Polymere, bei dem ein halogenhaltiges Polymer oder ein Gemisch aus zwei oder mehr halogenhaltigen Polymeren oder ein Gemisch aus einem oder mehreren halogenhaltigen Polymeren und einem oder mehreren halogenfreien Polymeren mit einem Schmelzformkörper gemäß Anspruch 10 oder einem gemäß einem der Ansprüche 1 bis 8 hergestellten Schmelzformkörper vermischt wird.

## Claims

1. Process for the shaping of melts which comprise at least one salt of the general formula CaₓAl₂(OH)_{2(x+3)-ny}A_{y}ⁿ⁻*mH₂O, in which x is a number from 2 to 12, y is a number of 0 to (2x + 5)/2, m is a number from 0 to 12 and n is a number from 1 to 3, where a melt which comprises at least one salt of the general formula
CaₓAl₂(OH)_{2(x+3)-ny}A_{y}ⁿ⁻*mH₂O, in which x is a number from 2 to 12, y is a number of 0 to (2x + 5)/2, m is a number from 0 to 12 and n is a number from 1 to 3, or which comprises a mixture of two or more such salts, and which comprises at least one organic compound or which comprises a mixture of two or more such compounds, with melting point below 200°C, is portioned to give portions, and the portions are then cooled to give a shaped melt product, where the content of organic compound with melting point below 200°C and of at least one salt of the general formula CaₓAl₂(OH)₂₍ₓ₊₃₎₋ₙA_{y}ⁿ⁻*m H₂O, in which x is a number from 2 to 12, y is a number of 0 to (2x + 5)/2, m is a number from 0 to 12 and n is a number from 1 to 3, in the melt is from 10 to 100% by weight.

2. Process according to Claim 1, **characterized in that** A is an anion selected from the group consisting of carbonate, phosphite and citrate.

3. Process according to any of the preceding claims, **characterized in that** the melt comprises at least one zinc compound.

4. Process according to any of the preceding claims, where the shaped melt product is in essence a pastille, flake, bead or cylinder.

5. Process according to any of the preceding claims, **characterized in that** the constituents to be shaped are charged to a container and are melted, and shaped melt products are produced from this melt.

6. Process according to any of the preceding claims, **characterized in that** the content of salts of the general formula CaₓAl₂(OH)_{2(x+3)-ny}A_{y}ⁿ⁻*mH₂O, in which x is a number from 2 to 12, y is a number of 0 to (2x + 5)/2, m is a number from 0 to 12 and n is a number from 1 to 3, in the melt is 40% by weight or less.

7. Process according to any of the preceding claims, **characterized in that** the melt comprises at least one other additive for the stabilization of halogen-containing polymers or for improving processability thereof.

8. Process according to Claim 7, **characterized in that** the additive is selected from the group consisting of aminouracil compounds, compounds having a structural element of the general formula II 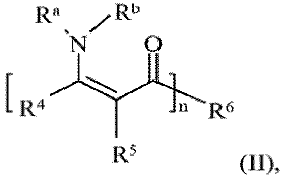 compounds having a mercapto-functional sp²-hybridized C atom, 2,4-pyrrolidinediones, 2,4-pyrrolidinedione derivatives, epoxy compounds, 1,3-dicarbonyl compounds, sterically hindered amines, organotin compounds, organic phosphite esters, blocked mercaptans, organic plasticizers, antioxidants, UV absorbers, light stabilizers, fillers, hydrotalcites, zeolites, alkali metal aluminocarbonates, impact modifiers, processing aids, gelling agents, antistatic agents, biocides, metal deactivators, optical brighteners, flame retardants, blowing agents and antifogging compounds.

9. Melt at least comprising a salt of the general formula CaₓAl₂(OH)_{2(x+3)-ny}A_{y}ⁿ⁻*m H₂O, in which x is a number from 2 to 12, y is a number of 0 to (2x + 5)/2, m is a number from 0 to 12 and n is a number from 1 to 3, and at least comprising an organic compound with melting point below 200°C, where the content of organic compound with melting point below 200°C and of at least one salt of the general formula
CaₓAl₂(OH)_{2(x+3)-ny}A_{y}ⁿ⁻*mH₂O, in which x is a number from 2 to 12, y is a number of 0 to (2x + 5)/2, m is a number from 0 to 12 and n is a number from 1 to 3, in the melt is from 10 to 100% by weight.

10. Shaped melt product at least comprising a salt of the general formula
CaₓAl₂(OH)_{2(x+3)-ny}A_{y}ⁿ⁻*mH₂O, in which x is a number from 2 to 12, y is a number of 0 to (2x + 5)/2, m is a number from 0 to 12 and n is a number from 1 to 3, and at least comprising an organic compound with melting point below 200°C, where the content of organic compound with melting point below 200°C and of at least one salt of the general formula CaₓAl₂(OH)₂₍ₓ₊₃₎₋ₙA_{y}ⁿ⁻*mH₂O, in which x is a number from 2 to 12, y is a number of 0 to (2x + 5)/2, m is a number from 0 to 12 and n is a number from 1 to 3, in the melt is from 10 to 100% by weight.

11. Polymer composition which can be produced via mixing of a halogen-containing organic polymer with a shaped melt product according to Claim 10 or with a shaped melt product produced according to any of Claims 1 to 8.

12. Use, for the production of polymeric mouldings or surface-coating agents, of a melt which comprises a salt of the general formula CaₓAl₂(OH)₂₍ₓ₊₃₎₋ₙA_{y}ⁿ⁻*mH₂O, in which x is a number from 2 to 12, y is a number of 0 to (2x + 5)/2, m is a number from 0 to 12 and n is a number from 1 to 3, and which comprises at least one organic compound with melting point below 200°C, where the content of organic compound with melting point below 200°C and of at least one salt of the general formula
CaₓAl₂(OH)_{2(x+3)-ny}A_{y}ⁿ⁻*mH₂O, in which x is a number from 2 to 12, y is a number of 0 to (2x + 5)/2, m is a number from 0 to 12 and n is a number from 1 to 3, in the melt is from 10 to 100% by weight.

13. Process for the stabilization of halogen-containing polymers, where a halogen-containing polymer or a mixture of two or more halogen-containing polymers, or a mixture of one or more halogen-containing polymers with one or more halogen-free polymers, is mixed with a shaped melt product according to Claim 10 or with a shaped melt product produced according to any of Claims 1 to 8.

## Revendications

1. Procédé de confection de masses fondues, qui contiennent au moins un sel de formule générale CaxAl2(OH)2(x+3)-nyAyn-*m H2O, x représentant un nombre de 2 à 12, y un nombre compris entre 0 et (2x+5)/2, m un nombre de 0 à 12, et n un nombre de 1 à 3, selon lequel une masse fondue contenant au moins un sel de formule générale CaxAl2(OH)2(x+3)-nyAyn-*m H2O, x représentant un nombre de 2 à 12, y un nombre compris entre 0 et (2x+5)/2, m un nombre de 0 à 12, et n un nombre de 1 à 3, ou un mélange de deux de ces sels ou plus, et au moins un composé organique ou un mélange de deux de ces composés ou plus, ayant un point de fusion inférieur à 200 °C, est divisée en parties, puis les parties sont refroidies avec obtention d'un corps moulé de masse fondue, la teneur de la masse fondue en composé organique ayant un point de fusion inférieur à 200 °C et en au moins un sel de formule générale CaxAl2(OH)2(x+3)-nyAyn-*m H2O, x représentant un nombre de 2 à 12, y un nombre compris entre 0 et (2x+5)/2, m un nombre de 0 à 12, et n un nombre de 1 à 3, étant de 10 à 100 % en poids.

2. Procédé selon la revendication 1, **caractérisé en ce qu'**A représente un anion choisi dans le groupe constitué par un carbonate, un phosphite ou un citrate.

3. Procédé selon l'une quelconque des revendications précédentes, **caractérisé en ce que** la masse fondue contient au moins un composé de zinc.

4. Procédé selon l'une quelconque des revendications précédentes, **caractérisé en ce que** le corps moulé de masse fondue consiste principalement en des pastilles, des paillettes, des billes ou des cylindres.

5. Procédé selon l'une quelconque des revendications précédentes, **caractérisé en ce que** les constituants à confectionner sont introduits dans un contenant, les constituants à confectionner sont fondus, et des corps moulés de masse fondue sont fabriqués à partir de cette masse fondue.

6. Procédé selon l'une quelconque des revendications précédentes, **caractérisé en ce que** la teneur de la masse fondue en sels de formule générale CaxAl2(OH)2(x+3)-nyAyn-*m H2O, x représentant un nombre de 2 à 12, y un nombre compris entre 0 et (2x+5)/2, m un nombre de 0 à 12, et n un nombre de 1 à 3, est de 40 % en poids ou moins.

7. Procédé selon l'une quelconque des revendications précédentes, **caractérisé en ce que** la masse fondue contient au moins un autre additif améliorant la stabilisation de polymères halogénés ou leur usinabilité.

8. Procédé selon la revendication 7, **caractérisé en ce que** l'additif est choisi dans le groupe constitué par les composés d'aminouracile, les composés contenant un élément structural de formule générale II 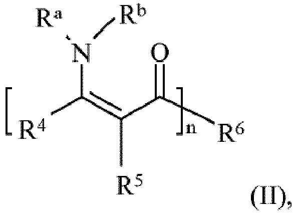 les composés contenant un atome C mercaptofonctionnel à hybridation sp2, ou les 2,4-pyrrolidine-diones ou les dérivés de 2,4-pyrrolidine-diones, les composés époxy, les composés de 1,3-dicarbonyle, les amines à encombrement stérique, les composés d'organo-étain, les esters de phosphite organiques, les mercaptans bloqués, les plastifiants organiques, les antioxydants, les absorbeurs UV ou les agents photoprotecteurs, les charges, les hydrotalcites, les zéolithes et les alumocarbonates alcalins, les modificateurs de la résistance aux impacts et les adjuvants d'usinage, les gélifiants, les antistatiques, les biocides, les désactivateurs de métaux, les azurants optiques, les agents ignifuges, les agents gonflants et les composés antibuée.

9. Masse fondue, contenant au moins un sel de formule générale CaxAl2(OH)2(x+3)-nyAyn-* mH2O, x représentant un nombre de 2 à 12, y un nombre compris entre 0 et (2x+5)/2, m un nombre de 0 à 12, et n un nombre de 1 à 3, et au moins un composé organique ayant un point de fusion inférieur à 200 °C, la teneur de la masse fondue en composé organique ayant un point de fusion inférieur à 200 °C et en au moins un sel de formule générale CaxAl2(OH)2(x+3)-nyAyn-*mH2O, x représentant un nombre de 2 à 12, y un nombre compris entre 0 et (2x+5)/2, m un nombre de 0 à 12, et n un nombre de 1 à 3, étant de 10 à 100 % en poids.

10. Corps moulé de masse fondue, contenant au moins un sel de formule générale CaxAl2(OH)2(x+3)-nyAyn-*m H2O, x représentant un nombre de 2 à 12, y un nombre compris entre 0 et (2x+5)/2, m un nombre de 0 à 12, et n un nombre de 1 à 3, et au moins un composé organique ayant un point de fusion inférieur à 200 °C, la teneur de la masse fondue en composé organique ayant un point de fusion inférieur à 200 °C et en au moins un sel de formule générale CaxAl2(OH)2(x+3)-nyAyn-*mH2O, x représentant un nombre de 2 à 12, y un nombre compris entre 0 et (2x+5)/2, m un nombre de 0 à 12, et n un nombre de 1 à 3, étant de 10 à 100 % en poids.

11. Composition polymère, pouvant être fabriquée par mélange d'un polymère organique halogéné avec un corps moulé de masse fondue selon la revendication 10 ou un corps moulé de masse fondue fabriqué selon l'une quelconque des revendications 1 à 8.

12. Utilisation d'une masse fondue contenant un sel de formule générale CaxAl2(OH)2(x+3)-nyAyn-*mH2O, x représentant un nombre de 2 à 12, y un nombre compris entre 0 et (2x+5)/2, m un nombre de 0 à 12, et n un nombre de 1 à 3, et au moins un composé organique ayant un point de fusion inférieur à 200 °C, la teneur de la masse fondue en composé organique ayant un point de fusion inférieur à 200 °C et en au moins un sel de formule générale CaxAl2(OH)2(x+3)-nyAyn-*mH2O, x représentant un nombre de 2 à 12, y un nombre compris entre 0 et (2x+5)/2, m un nombre de 0 à 12, et n un nombre de 1 à 3, étant de 10 à 100 % en poids, pour la fabrication de corps moulés polymères ou d'agents de revêtement de surface.

13. Procédé de stabilisation de polymères halogénés, selon lequel un polymère halogéné ou un mélange de deux polymères halogénés ou plus ou un mélange d'un ou de plusieurs polymères halogénés et d'un ou de plusieurs polymères sans halogène est mélangé avec un corps moulé de masse fondue selon la revendication 10 ou un corps moulé de masse fondue fabriqué selon l'une quelconque des revendications 1 à 8.
